# EUROPEAN PATENT APPLICATION

(11) **EP 1 804 494 A2**
(43) Date of publication of application: **04.07.2007**
(21) Application number: 07007773.0
(22) Date of filing: 16.09.1999
(51) Int. Cl.: H04N 5/44

(54) **Digital TV broadcast receiving apparatus, and transmitting and receiving system**

(30) Priority: 17.09.1998 JP 26258098; 18.12.1998 JP 36050398; 11.05.1999 JP 13067899
(62) Divisional of application: 99117975.5
(71) Applicant: MATSUSHITA ELECTRIC INDUSTRIAL CO., LTD., Osaka 571-8501 (JP)
(72) Inventor: Taniguchi, Tomohiko, Moriguchishi Osaka 570-0032 (JP); Nohara, Akira, Hyogo 662-0053 (JP)
(74) Representative: Balsters, Robert

(57) **Abstract**

A digital TV broadcast receiving apparatus includes change means for receiving first through Nth signals and changing at least an (N-1)th signal among the received signals by feed-forward control; and addition means for adding the signals output from the change means. N is a natural number of 2 or greater.

## Description

### 1. FIELD OF THE INVENTION:

The present invention relates to a digital TV broadcast receiving apparatus for receiving digital TV broadcast signals in order to decrease the jamming of the broadcast signals, and a system for transmitting and receiving such digital signals between the transmitting station and such a receiving apparatus.

### 2. DESCRIPTION OF THE RELATED ART:

For analog TV reception, one of the causes of deteriorations of the received signals is multipath interferences caused by reflecting or scattering of the radio waves. A video image suffering from the multipath interferences is distorted or temporarily interrupted. Japanese Laid-Open Publication No. 63-109676, for example, discloses a method for removing ghost from, for example, analog terrestrial TV broadcasting signals for fixed reception, by estimating the propagation characteristics of the radio waves based on reference signals which are inserted into the TV signals and constructing an adaptive equalizing filter for canceling the interfering signals.

However, for the mobile reception device of terrestrial TV signals, it is difficult to estimate the propagation characteristics of the radio waves since the propagation characteristics change drastically as the device moves. In this specification, the terms "mobile" and "moving" are used interchangeably.

Recently, a digital terrestrial TV broadcasting system has been proposed in order to alleviate such problems of the conventional analog terrestrial TV broadcasting system. The digital terrestrial TV broadcasting system is based on the OFDM (orthogonal frequency division multiplexing) technique. OFDM is a multicarrier transmission technique and it is effective against the multipath interferences. For example, in order to prevent the inter-symbol interference caused by reception of the delayed waves, a guard period referred to as a "guard interval" is inserted between the original OFDM symbols.

However, in the mobile environment, the signal quality degrades significantly by frequency selective fading, multipath fading with Doppler shifts and so on. It is because the interferences caused by the reflected signals dissatisfied the orthogonal condition of the OFDM signals. Moreover, for the digital terrestrial TV broadcasting, a SFN (Single Frequency Network) scheme is planned. In the SFN scheme, as the same television program are transmitted from plural transmitting stations by using the identical frequency, it can provide the effective use of the frequency bands. This scheme indispensably causes inter-symbol interference and degradation of frequency characteristics, in the same way as the multipath interferences.

### SUMMARY OF THE INVENTION

According to one aspect of the invention, a digital TV broadcast receiving apparatus includes change means for receiving first through Nth signals and changing at least an (N-1)th signal among the received signals by feed-forward control; and addition means for adding the signals output from the change means. N is a natural number of 2 or greater.

According to another aspect of the invention, a digital TV broadcast receiving apparatus includes change means for receiving first through Nth signals and changing at least an (N-1)th signal among the received signals based on an external signal; and addition means for adding the signals output from the change means. N is a natural number of 2 or greater. The external signal is generated based on the signal obtained by the addition means.

In one embodiment of the invention, the change means is phase shift means for shifting a phase of at least the (N-1)th signal.

In one embodiment of the invention, the change means is delay means for delaying at least the (N-1)th signal so as to change at least the (N-1)th signal.

In one embodiment of the invention, the change means is phase shift means for shifting a phase of at least the (N-1)th signal by a prescribed amount.

In one embodiment of the invention, the change means is delay means for delaying at least the (N-1)th signal by a prescribed delay time period so as to change at least the (N-1)th signal.

In one embodiment of the invention, the digital TV broadcast receiving apparatus further includes input means for converting an electromagnetic wave into a plurality of electric signals and outputting the plurality of electric signals as the first through the Nth signals; receiving means for performing frequency conversion of the signal added by the addition means and outputting the frequency-converted signal; and demodulation means for converting the frequency-converted signal into a baseband signal. The delay means allows the prescribed delay time period to be arbitrarily set. The addition means allows an addition ratio at which the signals output from the delay means are added to be arbitrarily set.

In one embodiment of the invention, the digital TV broadcast receiving apparatus further includes input means for converting an electromagnetic wave into a plurality of electric signals and outputting the plurality of electric signals; amplification means for amplifying the plurality of electric signals at a prescribed amplification ratio and outputting the amplified signals as the first through the Nth signals; receiving means for performing frequency conversion of the signal added by the addition means and outputting the frequency-converted signal; demodulation means for demodulating the frequency-converted signal; delay wave estimation means for receiving a signal indicating a demodulation state obtained by the demodulation means and estimating delay wave information included in the electromagnetic wave received by the input means based on the demodulation state; and addition control means for generating at least one of the prescribed amplification ratio and the prescribed delay time period based on the delay wave information obtained by the delay wave estimation means, and outputting the at least one of the prescribed amplification ratio and the prescribed delay time period to at least one of the amplification means and the delay means.

In one embodiment of the invention, the digital TV broadcast receiving apparatus further includes input means for converting an electromagnetic wave into a plurality of electric signals and outputting the plurality of electric signals; receiving means for performing frequency conversion of the plurality of electric signals and outputting the plurality of frequency-converted signals as the first through the Nth signals; and demodulation means for converting the signal added by the addition means into a baseband signal. The delay means allows the prescribed delay time period to be arbitrarily set, and
the addition means allows an addition ratio at which the signals output by the delay means are added to be arbitrarily set.

In one embodiment of the invention, the digital TV broadcast receiving apparatus further includes input means for converting an electromagnetic wave into a plurality of electric signals and outputting the plurality of electric signals as the first through the Nth signals ; receiving means for performing frequency conversion of the signal added by the addition means and outputting the frequency-converted signal; and demodulation means for converting the frequency-converted signal into a baseband signal. The phase shift means allows the prescribed amount to be arbitrarily set. The addition means allows an addition ratio at which the signals output by the phase shift means are added to be arbitrarily set.

In one embodiment of the invention, the digital TV broadcast receiving apparatus further includes input means for converting an electromagnetic wave into a plurality of electric signals and outputting the plurality of electric signals; amplification means for amplifying the plurality of electric signals at a prescribed amplification ratio and outputting the amplified signals as the first through the Nth signals; receiving means for performing frequency conversion of the signal added by the addition means and outputting the frequency-converted signal; demodulation means for demodulating the frequency-converted signal; delay wave estimation means for receiving a signal indicating a demodulation state obtained by the demodulation means and estimating delay wave information included in the electromagnetic wave received by the input means based on the demodulation state; and addition control means for generating at least one of the prescribed amplification ratio and the prescribed amount based on the delay wave information obtained by the delay wave estimation means, and outputting the at least one of the prescribed amplification ratio and the prescribed amount to at least one of the amplification means and the phase shift means.

In one embodiment of the invention, the digital TV broadcast receiving apparatus further includes input means for converting an electromagnetic wave into a plurality of electric signals and outputting the plurality of electric signals; receiving means for performing frequency conversion of the plurality of electric signals and outputting the plurality of frequency-converted signals as the first through the Nth signals; and demodulation means for converting the signal added by the addition means into a baseband signal. The phase shift means allows the prescribed amount to be arbitrarily set. The addition means allows an addition ratio at which the signals output by the phase shift means are added to be arbitrarily set.

In one embodiment of the invention, the digital TV broadcast receiving apparatus further includes delay wave estimation means for receiving a signal indicating a demodulation state obtained by the demodulation means and estimating delay wave information included in the electromagnetic wave received by the input means based on the demodulation state; and addition control means for generating at least one of the prescribed addition ratio and the prescribed delay time period based on the delay wave information obtained by the delay wave estimation means, and outputting the at least one of the prescribed addition ratio and the prescribed delay time period to at least one of the addition means and the delay means.

In one embodiment of the invention, the digital TV broadcast receiving apparatus further includes delay wave estimation means for receiving a signal indicating a demodulation state obtained by the demodulation means and estimating delay wave information included in the electromagnetic wave received by the input means based on the demodulation state; and addition control means for generating at least one of the prescribed addition ratio and the prescribed amount based on the delay wave information obtained by the delay wave estimation means, and outputting the at least one of the prescribed addition ratio and the prescribed amount to at least one of the addition means and the phase shift means.

In one embodiment of the invention, the delay wave estimation means receives a signal indicating the demodulation state obtained by the demodulation means and estimates the delay wave information including a strength of a delay wave, a phase difference between the delay wave and a direct wave, and a delay time period of the delay wave with respect to the direct wave.

In one embodiment of the invention, the addition control means includes delay time period control means having a variable reactance element, and controls the prescribed delay time period by varying a voltage applied to the variable reactance element.

In one embodiment of the invention, the addition control means includes phase control means having a variable reactance element, and controls the prescribed amount by varying a voltage applied to the variable reactance element.

In one embodiment of the invention, the digital TV broadcast receiving apparatus further includes position detection means for detecting a receiving position of the digital TV broadcast receiving apparatus; and position information determination means for determining a radio state at the receiving position in accordance with a signal from the position detection means. The addition control means generates at least one of the prescribed amplification ratio and the prescribed delay time based on the delay wave information obtained by the delay wave estimation means and the radio state obtained by the position information determination means.

In one embodiment of the invention, the digital TV broadcast receiving apparatus further includes position detection means for detecting a receiving position of the digital TV broadcast receiving apparatus; and position information determination means for determining a radio state at the receiving position in accordance with a signal from the position detection means. The addition control means generates at least one of the prescribed amplification ratio and the prescribed amount based on the delay wave information obtained by the delay wave estimation means and the radio state obtained by the position information determination means.

In one embodiment of the invention, the digital TV broadcast receiving apparatus further includes speed detection means for detecting a moving speed of the digital TV broadcast receiving apparatus; position detection means for detecting a receiving position of the digital TV broadcast receiving apparatus; and position information determination means for determining a radio state at the receiving position in accordance with a signal from the position detection means and a signal from the speed detection means. The addition control means generates at least one of the prescribed amplification ratio and the prescribed delay time period based on the delay wave information obtained by the delay wave estimation means and the radio state obtained by the position information determination means.

In one embodiment of the invention, the digital TV broadcast receiving apparatus further includes speed detection means for detecting a moving speed of the digital TV broadcast receiving apparatus; position detection means for detecting a receiving position of the digital TV broadcast receiving apparatus; and position information determination means for determining a radio state at the receiving position in accordance with a signal from the position detection means and a signal from the speed detection means. The addition control means generates at least one of the prescribed amplification ratio and the prescribed amount based on the delay wave information obtained by the delay wave estimation means and the radio state obtained by the position information determination means.

In one embodiment of the invention, the speed detection means and the position detection means are a navigation system.

In one embodiment of the invention, the amplification means complements a reduction in signal gain at signal distribution.

In one embodiment of the invention, the input means includes a plurality of antennas having different receiving characteristics.

According to still another aspect of the invention, a digital TV broadcast receiving apparatus includes input means for converting an electromagnetic signal into a plurality of electric signals; receiving means for performing frequency conversion of the plurality of electric signals obtained by the input means; demodulation means for converting the plurality of frequency-converted signals into a baseband signal; delay wave estimation means for receiving information on a demodulation state obtained by the demodulation means and estimating delay wave information included in the electromagnetic wave; and demodulation control means for generating a control signal for controlling a transfer function processed by the demodulation means based on the delay wave information.

In one embodiment of the invention, the demodulation means includes frequency analysis means for performing frequency conversion of the plurality of signals obtained by the receiving means; adjustment means for operating the plurality of signals obtained by the frequency analysis means; and decoding means for decoding the plurality of signals obtained by the adjustment means. The delay wave estimation means estimates the delay wave information including a strength of a delay wave, a phase difference between the delay wave and a direct wave, and a delay time period of the delay wave with respect to the direct wave based on the information on the demodulation state obtained by the decoding means. The demodulation control means generates a control signal based on the delay wave information so as to control the transfer function of the adjustment means and provides the adjustment means with the control signal.

In one embodiment of the invention, the demodulation means includes frequency analysis means for performing frequency conversion of the plurality of signals obtained by the receiving means; adjustment means for operating the plurality of signals obtained by the frequency analysis means; and decoding means for decoding the plurality of signals obtained by the adjustment means, the delay wave estimation means estimates the delay wave information including a strength of a delay wave, a phase difference between the delay wave and a direct wave, and a delay time period of the delay wave with respect to the direct wave based on the information on the demodulation state obtained by the decoding means and a signal obtained from the frequency analysis means. The demodulation control means generates a control signal based on the delay wave information so as to control the transfer function of the adjustment means and provides the adjustment means with the control signal.

In one embodiment of the invention, the digital TV broadcast receiving apparatus further includes position detection means for detecting a receiving position of the digital TV broadcast receiving apparatus; and position information determination means for determining a radio state at the receiving position in accordance with a signal from the position detection means. The demodulation control means generates a control signal based on the delay wave information obtained by the delay wave estimation means and the radio state obtained by the position information determination means, and provides the adjustment means with the control signal.

In one embodiment of the invention, the digital TV broadcast receiving apparatus further includes speed detection means for detecting a moving speed of the digital TV broadcast receiving apparatus; position detection means for detecting a receiving position of the digital TV broadcast receiving apparatus; and position information determination means for determining a radio state at the receiving position in accordance with the detected moving speed and the detected receiving position. The demodulation control means generates a control signal based on the delay wave information obtained by the delay wave estimation means, the radio state obtained by the position information determination means and a signal obtained by the frequency analysis means, and provides the adjustment means with the control signal.

In one embodiment of the invention, the speed detection means and the position detection means are a navigation system.

In one embodiment of the invention, the input means includes a plurality of antennas having different receiving characteristics.

According to still another aspect of the invention, the digital TV broadcast receiving apparatus includes input means for converting an electromagnetic wave into a plurality of electric signals; receiving means for performing frequency conversion of the plurality of electric signals obtained by the input means; addition means for adding the plurality of signals obtained by the receiving means; demodulation means for demodulating the signal obtained by the addition means; delay wave estimation means for receiving a signal indicating a demodulation state obtained by the receiving means and estimating delay wave information included in the electromagnetic wave; and addition control means for controlling the addition means and the receiving means based on the delay wave information. The receiving means controls a frequency change amount at frequency conversion in accordance with the information obtained by the addition control means. The addition means controls an addition ratio, at which the plurality of signals obtained by the receiving means are added, in accordance with the information obtained by the addition control means.

In one embodiment of the invention, the addition control means includes gain control means for determining the addition ratio in accordance with the delay wave information; and reference signal control means for setting a frequency of a reference signal for each of the plurality of signals, the frequency being used for frequency conversion performed by the receiving means in accordance with the delay wave information.

In one embodiment of the invention, the delay wave estimation means receives the signal indicating the demodulation state obtained by the demodulation means and estimates the delay wave information including a strength of a delay wave, a phase difference between the delay wave and a direct wave, and a delay time period of the delay wave with respect to the direct wave.

In one embodiment of the invention, the digital TV broadcast receiving apparatus further includes position detection means for detecting a receiving position of the digital TV broadcast receiving apparatus; and position information determination means for determining a radio state at the receiving position in accordance with the detected receiving position. The addition control means controls the addition means and the receiving means based on the delay wave information and the radio state.

In one embodiment of the invention, the digital TV broadcast receiving apparatus further includes speed detection means for detecting a moving speed of the digital TV broadcast receiving apparatus; position detection means for detecting a receiving position of the digital TV broadcast receiving apparatus; and position information determination means for determining a radio state at the receiving position in accordance with the detected moving speed and the detected receiving position. The addition control means controls the addition means and the receiving means based on the delay wave information and the radio state.

In one embodiment of the invention, the speed detection means and the position detection means are a navigation system.

In one embodiment of the invention, the input means includes a plurality of antennas having different receiving characteristics.

In one embodiment of the invention, the demodulation state is represented by a pilot signal included in the electromagnetic wave.

In one embodiment of the invention, the position information determination means acquires a position of a transmitting station and estimates a radio state at the receiving position based on information obtained by vehicle information detection means and the position of the transmitting station.

In one embodiment of the invention, the position information determination means stores in advance a radio state at a plurality of positions and estimates a radio state at the receiving position based on information obtained by vehicle information detection means.

In one embodiment of the invention, the position information determination means acquires, either at a prescribed interval or at an arbitrary interval, a radio state at a plurality of positions, updates the radio state at the plurality of positions, and estimates a radio state at the receiving position based on information obtained by vehicle information detection means.

In one embodiment of the invention, a broadcasting station sends receiving information data indicating a receiving state at a plurality of positions and the digital TV broadcast receiving apparatus according to claim 42 receives the broadcasting station sends receiving information data, thereby estimating the radio state.

In one embodiment of the invention, the position information determination means acquires, at a prescribed interval or at an arbitrary interval, a radio state at a plurality of positions, and estimates a radio state at the receiving position based on information obtained by vehicle information detection means or the information obtained by the position information determination means and the receiving state at the plurality of positions.

In one embodiment of the invention, the digital TV broadcast receiving apparatus further includes an error ratio measurement section for measuring a signal error ratio at the demodulation means, wherein when the error ratio exceeds a prescribed value for a prescribed time period, the error ratio measurement section generates a control signal. The input means includes a selection section for selecting an output signal based on the control signal from the error ratio measurement section.

In one embodiment of the invention, the addition control means generates a control signal for varying the addition ratio of the addition means based on the signal output by the delay wave estimation means so as to attenuate a signal corresponding to a signal having an error ratio exceeding a prescribed value at the demodulation means.

In one embodiment of the invention, selecting timing at which the input means selects the output signal is at an interval equal to or greater than a normal value of a receiving signal.

In one embodiment of the invention, varying timing at which the addition ratio of the addition means is varied is at an interval equal to or greater than a normal value of a receiving signal.

In one embodiment of the invention, selecting timing at which the input means selects the output signal is on a receiving frame of the received signal, or is at an interval equal to a normal value or an arbitrary frame.

In one embodiment of the invention, varying timing at which the addition ratio of the addition means is varied is on a receiving frame of a receiving signal, or is at an interval equal to a normal value or an arbitrary frame.

In one embodiment of the invention, a time at which the addition ratio of the addition means, the delay time period of the delay means, the amplification ratio of the amplification means, or the prescribed amount of the phase shift means is updated is during a guard period of a receiving signal, or immediately before or after an effective symbol period.

In one embodiment of the invention, the input means includes a plurality of antennas, and an installment location of at lease one of the plurality of antennas is moved time-wise.

In one embodiment of the invention, the at least one antenna is controlled in accordance with a wavelength of a TV signal to be received.

In one embodiment of the invention, a distance between installment locations of at least two of the plurality of antennas is shorter than the wavelength of the TV signal to be received.

According to still another aspect of the invention, the digital TV broadcast receiving apparatus includes input means for converting an electromagnetic wave into a plurality of electric signals; amplification means for amplifying the plurality of signals obtained by the input means; delay means for providing the plurality of signals obtained by the amplification means with a delay time period; addition means for adding the plurality of signals obtained by the delay means; frequency conversion means for converting the signal obtained by the addition means into a baseband signal; demodulation means for demodulating the signal obtained by the frequency conversion means; speed detection means for acquiring moving speed information of a mobile; receiving state estimation means for acquiring a multipath interference state; gain control means for controlling an amplification ratio of the amplification means based on the multipath interference state and the moving speed information; and delay time period control means for controlling the delay time period to be provided to the delay means.

In one embodiment of the invention, when the moving speed of the mobile is low or the mobile stops, the delay time period control means varies the delay time period time-wise.

In one embodiment of the invention, the delay time period control means determines a varying amount of the delay time period in accordance with a transfer system of a receiving signal.

In one embodiment of the invention, the receiving state estimation means acquires and utilizes information on an input state of the input means.

In one embodiment of the invention, the amplification means has a plurality of amplification ratios for amplifying the plurality of electric signals obtained by the input means. The gain control means controls the plurality of amplification ratios of the amplification means in accordance with a receiving characteristic of a receiving signal.

In one embodiment of the invention, the delay time period control means determines an upper limit of the varying amount of the delay time period in accordance with a transfer system of a receiving signal.

According to still another aspect of the invention, the digital TV broadcast receiving apparatus includes input means for converting an electromagnetic wave into a plurality of electric signals; amplification means for amplifying the plurality of signals obtained by the input means; phase shift means for providing the plurality of signals obtained by the amplification means with a prescribed phase shift amount; addition means for adding the plurality of signals obtained by the phase shift means; frequency conversion means for converting the signal obtained by the addition means into a baseband signal; demodulation means for demodulating the signal obtained by the frequency conversion means; speed detection means for acquiring moving speed information of a mobile; receiving state estimation means for acquiring a multipath interference state; gain control means for controlling an amplification ratio of the amplification means based on the multipath interference state and the moving speed information; and phase control means for controlling the phase shift amount to be provided to the phase shift means.

In one embodiment of the invention, when the moving speed of the mobile is low or the mobile stops, the phase control means varies the prescribed phase amount time-wise.

In one embodiment of the invention, the phase control means determines a varying amount of the prescribed phase amount in accordance with a transfer system of a receiving signal.

In one embodiment of the invention, the receiving state estimation means acquires and utilizes information on an input state of the input means.

In one embodiment of the invention, the amplification means has a plurality of amplification ratios for amplifying the plurality of electric signals obtained by the input means. The gain control means controls the plurality of amplification ratios of the amplification means in accordance with a receiving characteristic of a receiving signal.

In one embodiment of the invention, the phase control means determines an upper limit of the varying amount of the prescribed phase amount in accordance with a transfer system of a receiving signal.

In one embodiment of the invention, the addition control means includes gain control means for determining the addition ratio in accordance with the delay wave information; and reference signal control means for setting a reference signal so that a phase of the reference signal is different with respect to the plurality of signals, the reference signal being used for frequency conversion performed by the receiving means.

In one embodiment of the invention, the delay wave estimation means receives the signal indicating the demodulation state obtained by the demodulation means and estimates the delay wave information including a strength of a delay wave, a phase difference between the delay wave and a direct wave, and a delay time period of the delay wave with respect to the direct wave.

In one embodiment of the invention, the digital TV broadcast receiving apparatus further includes amplification means for complementing a reduction in signal gain at signal distribution.

Thus, the invention described herein makes possible the advantage of providing a digital TV broadcast receiving apparatus for alleviating receiving interferences of digital data while receiving the data while moving, and a system for transmitting and receiving such data between a station and such a digital TV broadcast receiving apparatus.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram showing a structure of a digital TV broadcast receiving apparatus according to the present invention;
Figure **2** is a block diagram showing a structure of another digital TV broadcast receiving apparatus according to the present invention;
Figure **3** is a block diagram showing a structure of still another digital TV broadcast receiving apparatus according to the present invention;
Figure **4** is a block diagram showing a structure of still another digital TV broadcast receiving apparatus according to the present invention;
Figure **5** is a block diagram showing a structure of still another digital TV broadcast receiving apparatus according to the present invention;
Figure **6** is a block diagram showing a structure of still another digital TV broadcast receiving apparatus according to the present invention;
Figure **7** is a conceptual view showing results of frequency analysis of a signal which is jammed by a delay wave when received by a signal receiving apparatus;
Figure **8** is a conceptual view of gain control performed by addition means;
Figure **9** is a conceptual view showing the relationship between the error ratio and the delay time period of a delay wave;
Figure **10** is a flowchart illustrating antenna switching;
Figure **11** is a diagram illustrating a method for controlling a delay time period by delay means;
Figure **12** is a block diagram showing a structure of still another digital TV broadcast receiving apparatus according to the present invention;
Figure **13** is a block diagram showing a structure of receiving means;
Figure **14** is a block diagram showing a structure of another receiving means;
Figure **15** is a block diagram showing a structure of still another receiving means;
Figure **16** is a diagram showing antennas;
Figure **17** is an enlarged view of Figure **16**;
Figure **18A** is a block diagram showing a structure of still another digital TV broadcast receiving apparatus according to the present invention;
Figure **18B** is a block diagram showing a structure of still another digital TV broadcast receiving apparatus according to the present invention;
Figure **18C** is a block diagram showing a structure of still another digital TV broadcast receiving apparatus according to the present invention;
Figure **18D** is a block diagram showing a structure of still another digital TV broadcast receiving apparatus according to the present invention;
Figure **19** is a block diagram showing a structure of phase shift means;
Figure **20** is a block diagram showing a structure of still another digital TV broadcast receiving apparatus according to the present invention;
Figure **21** is a flowchart illustrating an exemplary operation of delay time period control means;
Figure **22** is a block diagram showing a structure of still another digital TV broadcast receiving apparatus according to the present invention;
Figures **23A** and **23B** are graphs illustrating a receiving error generation state which occurs in the environment having relatively strong receiving interferences:
Figure **24** is a graph illustrating the relationship between a voltage applied to a variable reactance element and the phase shift amount varying in accordance with the voltage;
Figures **25A, 25B** and **25C** are graphs illustrating the relationship between the voltage applied to a phase shift section and time;
Figure **26** is a block diagram showing a structure of still another receiving means;
Figure **27** is a block diagram showing a structure of input means;
Figure **28** is a diagram illustrating an exemplary structure of an OFDM signal;
Figure **29** is a diagram illustrating an exemplary structure of an analog TV transfer signal; and
Figure **30** is a diagram illustrating a guard interval period and an effective symbol period.

### DESCRIPTION OF THE EMBODIMENTS

Hereinafter, the present invention will be described by way of illustrative examples with reference to the accompanying drawings.

### (Example 1)

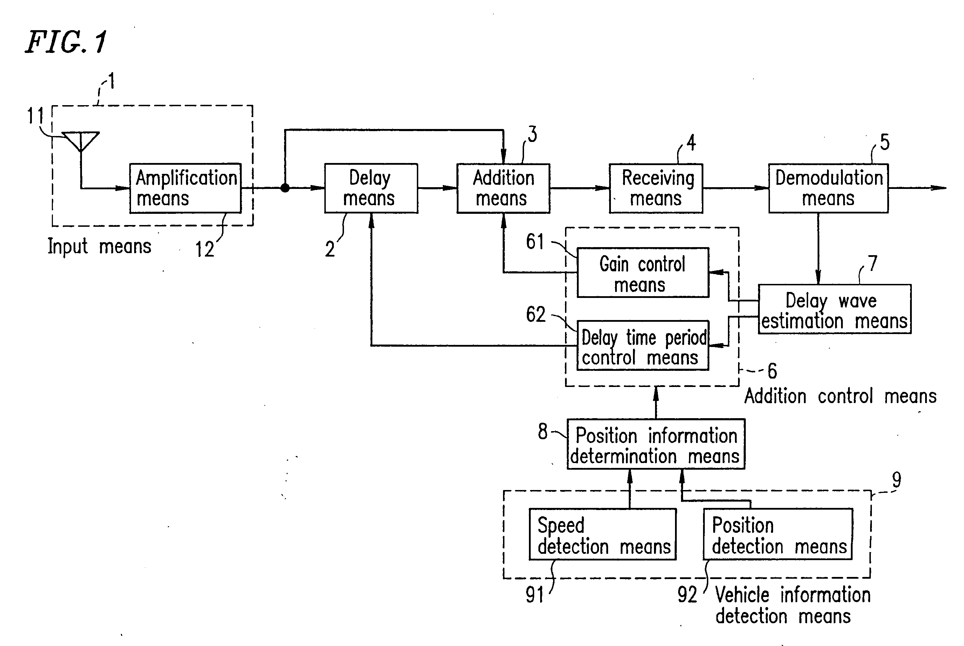

A digital TV broadcast receiving apparatus in a first example according to the present invention will be described with reference to Figure **1**. Figure **1** is a block diagram of the digital TV broadcast receiving apparatus in the first example.

As shown in Figure **1**, the digital TV broadcast receiving apparatus in the first example includes input means **1**, delay means **2**, addition means **3**, receiving means **4**, demodulation means **5**, addition control means **6**, and delay wave estimation means **7**.

The digital TV broadcast receiving apparatus operates, for example, in the following manner.

A radio wave of TV broadcasting is converted into electric signals by, for example, the receiving antenna **11** in the input means **1**, and transferred to the delay means **2** and also the addition means **3**. In more detail, a TV broadcasting signal which has been converted into the electric signals is delayed by the delay means **2** in accordance with a delay control signal which is sent from the addition control means **6**, and then transferred to the addition means **3**. The addition means **3** puts a gain to each of the signals sent from the input means **1** and the signal sent from the delay means **2**, and then adds the two signals. The added signal is transferred to the receiving means **4**. The addition can be performed by a simple operation such as, for example, addition and maximum value selection.

Control of a delay time period performed by the delay means **2** will be described.

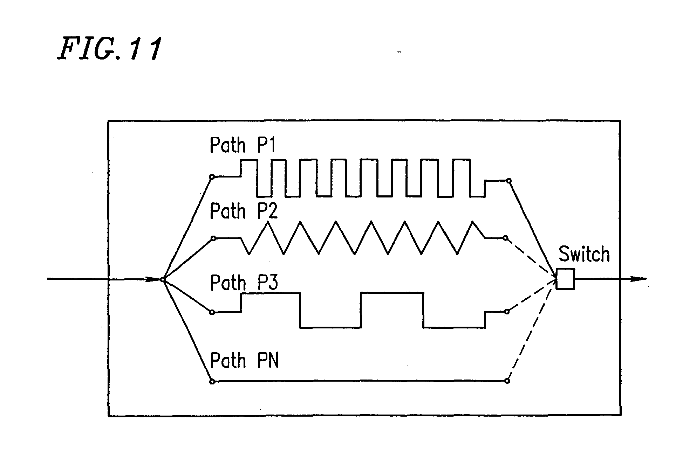

A frequency band of the signals processed by the delay means **2** is a frequency band of TV. Accordingly, the delay means **2** can control the delay time period of the signal by, for example, selecting one of a plurality of paths P1 through PN by a switch. The plurality of paths P1 through PN can be signal lines having different lengths. The switch shown in Figure **11** can select one of the plurality of paths P1 through PN based on a delay control signal obtained by the addition control means **6**.

The plurality of paths P1 through PN can be signal lines having different signal propagation characteristics. In this case also, the switch shown in Figure **11** can select one of the plurality of paths P1 through PN based on a delay control signal obtained by the addition control means **6**.

The delay means **2** shown in Figure **1** can be structured to shift each of phases by controlling a variable reactance element using a voltage instead of switching the length or signal propagation characteristic of the path using the switch shown in Figure **11**.

Returning to Figure **1**, the receiving means **4** extracts a signal of a necessary frequency band among the signals obtained by the addition means **3**. Then, the receiving means **4** converts the extracted signal into a signal having a frequency which can be processed by the demodulation means **5** and transfers the signal to the demodulation means **5**. The demodulation means **5** demodulates a receiving signal and outputs the signal to the delay wave estimation means **7**. In other words, the demodulation means **5** provides the delay wave estimation means **7** with demodulation information.

The delay wave estimation means **7** estimates a delay wave included in a receiving wave based on the demodulation information obtained by the demodulation means **5**. For example, the delay wave estimation means **7** estimates, based on the information obtained by the demodulation means **5**, at least one of a plurality of pieces of delay information, i.e., the strength of the delay wave included in the signal received by the input means **1**, the strength of the delay wave, the strength of a direct wave and phase difference between the delay wave and the direct wave, and delay time period of the delay wave with respect to the direct wave.

A method for demodulation and delay wave estimation will be described below.

The digital terrestrial television broadcasting in Japan, for which attempts for standardizing the broadcasting system are being made, uses the OFDM (orthogonal frequency division multiplexing) system as a modulation mode. The demodulation means **5** performs OFDM demodulation to decode a code which is received. The decoding process includes frequency analysis using, for example, FFT (Fast Fourier Transform). When the frequency analysis is performed using FFT, the delay time period can be detected by detecting the positions and number of dips of frequency components of the receiving signal based on the result of the frequency analysis. Alternatively, the demodulation means **5** can demodulate data using various pilot signals included in the signal which has been received. The demodulation means **5** can estimate the transfer characteristic of the signal using the pilot signals.

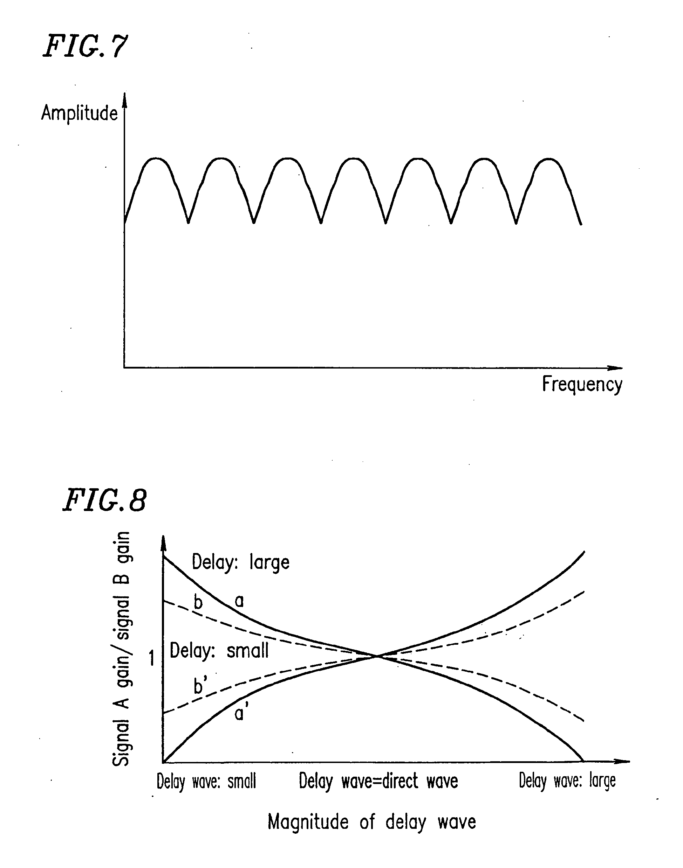

Figure **7** is a graph illustrating the frequency analyzed during the OFDM system when a delay wave exists. As shown in Figure 7, when a delay wave exists, a plurality of frequency components include a dip. When no delay wave exists, the frequency characteristic is flat (not shown).

When a plurality of frequency components include a dip, i.e., when a receiving signal includes a delay wave, the delay wave estimation means **7** can detect the delay wave by observing a change in the pilot signals or deletion of a pilot signal.

When the receiving signal includes a delay wave, the delay wave estimation means **7** can acquire information regarding the position of data including an error by error correction processing which is performed after the FFT, and estimate the delay time period of the interfering wave based on the information.

The above description is made regarding the digital broadcasting system in Japan, but the present invention is applicable to analog broadcasting systems and digital broadcasting systems used in different countries. For example, the present invention is applicable to a single carrier transfer system instead of the OFDM system.

Hereinafter, exemplary setting of an addition gain and generation of a delay time period will be described.

The addition control means **6** outputs a signal for controlling the delay means **2** and the addition means **3** based on delay wave information provided by the delay wave estimation means **7**. As shown in Figure **1**, the addition control means **6** includes gain control means **61** and delay time period control means **62**.

The gain control means **61** sets an addition gain at the addition means **3** based on the delay wave information obtained by the delay wave estimation means **7**. The addition gain is set as described below with reference to Figure **8**. It is assumed that the delay means **2** (Figure **1**) includes a first delay section and a second delay section. In Figure **8**, the horizontal axis represents the magnitude of the delay wave, and the vertical axis represents the ratio of a signal A gain with respect to a signal B gain (signal A gain/signal B gain). The signal A gain represents a gain of the signal sent from the first delay section to the addition means **3**, and the signal B gain represents a gain of the signal sent from the second delay section to the addition means **3**.

When the level of the delay wave is higher than a reference level, specifically the level of the delay wave is substantially the same as the level of the direct wave, the gain control means **61** controls the delay wave and the direct wave to be added to have an equal gain.

When the level of the delay wave is lower than the reference level or higher than that of the direct wave, the gain control means **61**, for example, controls the addition means **3** to reduce the gain of the signal from the delay means **2** or the gain of the signal from the input means **1** so that the delay wave and the direct wave to be added have different gains.

When the gain control is performed based on the delay time period of the delay wave obtained by the delay wave estimation means **7**, the gain control means **61**, for example, controls the addition means **3** so that the gain difference between the delay wave and the direct wave is larger when the delay time period is longer (curve **a** in Figure **8**) than when the delay time period is shorter (curve **b** in Figure **8**).

The delay time period control means **62** (Figure **1**) operates as follows. A delay time period, by which the signal needs to be delayed in the delay means **2** under the control of the delay time period control means **62**, is set to be substantially the same as the delay time period estimated by the delay wave estimation means **7**.

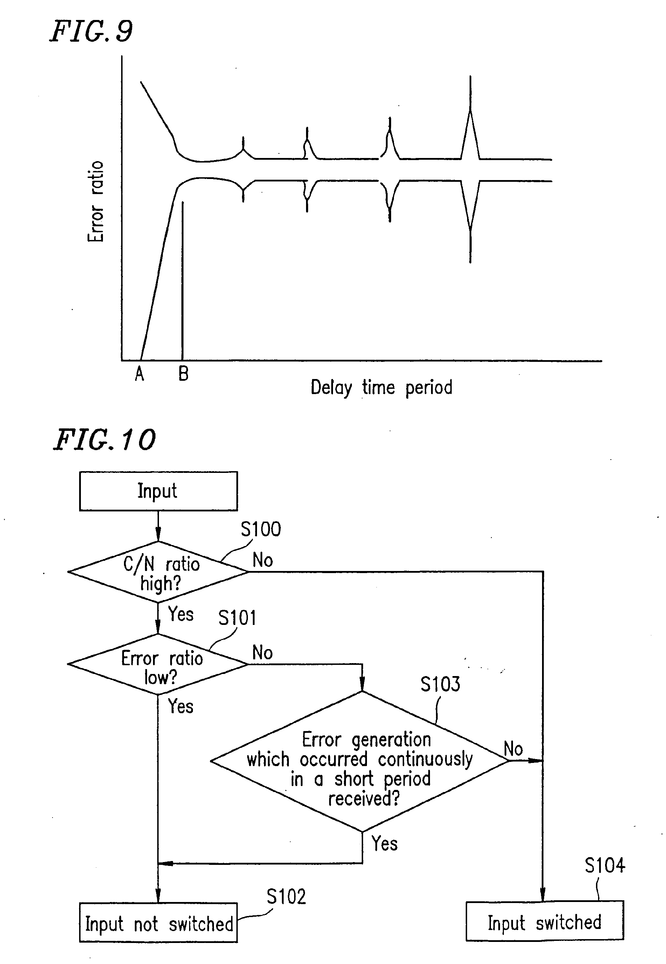

Figure **9** is a graph illustrating an exemplary relationship between the delay wave and an error ratio of the demodulated signal. As shown in Figure **9**, when the delay time period is shorter (point **B**, less than about 2.5 µs), the error ratio tends to drastically increase. The delay time period control means **62** can effectively avoid such an increase in the error ratio by setting the delay time period at a prescribed level (default value) of, for example, about 2. 5 µs or more, instead of at the value obtained by the delay wave estimation means **7**. The term "error" refers to wrong recognition of a receiving signal. The term "error ratio" indicates, for example, the ratio between the number of correct signals and the number of error signals.

The upper limit of the delay time needs to be less than a guard period added to an OFDM signal. The delay means **2** can always set a prescribed delay time period in order to prevent the error ratio from increasing due to a delay wave having a relatively short delay time period. An influence of a delay wave having a short delay time period can be prevented with certainty by setting the delay time period at twice the value at point **B** (i.e., about 5 µs).

When a signal is received by an antenna as shown in Figure **1**, it is possible that a delay time period shorter than that of a reciprocal of the bandwidth of the receiving signal is given to the signal and the delayed signal is added to the receiving signal, and thus the noise level of the resultant signal is reduced so as to reduce the error ratio. This is possible because the dip positions generated by the signal as a result of the addition are outside the bandwidth of the signal. For example, when the bandwidth of the signal is 500 kHz, the delay time period to add needs to be 2 µs or less. Such a system of adding a signal provided with a short delay time period is effective in improving the receiving level of the frequency of the receiving signals, specifically in narrow bandwidth broadcasting, which is used as service broadcasting for mobile receiving devices.

When the digital TV broadcast receiving apparatus shown in Figure **1** is mounted on a vehicle, the apparatus further includes position information determination means **8** and vehicle information detection means **9**. The digital TV broadcast receiving apparatus in the first example can include the position information determination means **8** and the vehicle information detection means **9** even when not mounted on a vehicle.

An exemplary signal receiving operation of the digital TV broadcast receiving apparatus mounted on a vehicle in the first example will be described.

The vehicle information detection means **9**, provided for detecting information on a vehicle which is moving, includes speed detection means **91** and position detection means **92**.

The speed detection means **91** detects the speed of the vehicle which is receiving signals while moving, and the position detection means **92** detects the position of the vehicle. A navigation device is usable as the vehicle information detection means **9**. Usable as the position detection means **92** are, for example, a GPS device, a PHS unit, a cellular phone, and a road monitoring system such as, for example, VICS. The vehicle information detected by the vehicle information detection means **9** is transferred to the position information determination means **8**.

The position information determination means **8** acquires information such as topography and finds a digital TV broadcasting station from which the radio wave can be received at the position for receiving the digital TV broadcasting (receiving position). The position information determination means **8** further estimates the delay time period or the strength of the radio wave at the receiving position, in consideration of the distance between the receiving position and the transmitting station or the reflection of the radio wave by mountains or buildings. In order to perform such functions, the position information determination means **8** stores information on the frequency of the signal sent from a transmitting station such as, for example, the broadcasting station or relay station, the location of the transmitting station, signal transmitting output and the like. Such information can be stored by possession or downloading through communication means such as, for example, broadcasting or telephone lines. The position information determination means **8** compares such information with the position information obtained from the vehicle information detection means **9** and finds the delay time period or the strength of the radio wave at the receiving point.

The position information determination means 8 can further show, in a map, information on, for example, the position, size and height of buildings in the vicinity of the receiving point together with the position of the broadcasting station. The delay time period and the strength of the radio wave can be found more accurately by considering the reflection or the like by the buildings. A navigation system, for example, is usable for processing the information on the transmitting station, buildings, mountains and the like.

Since speed detection means **91** provides the speed of the vehicle which is receiving signals while moving, the delay wave which will appear next can be estimated. Accordingly, the delay wave can be followed more quickly than by a system which does not consider the speed of the vehicle.

The addition control means **6** performs addition gain control and the delay time period control, based on the delay wave information obtained by the position information determination means **8**. The addition gain control and the delay time period control are performed in the same manner as when the delay wave information obtained by the delay wave estimation means **7** is used.

The information obtained by the delay wave estimation means **7** and the information obtained by the position information determination means **8** can be combined. In this case, only when the contents of the delay wave information obtained by the means **7** and **8** are close to each other, are the gain control and the delay time period control performed. When the contents of the delay wave information obtained by the means **7** and **8** are far from each other, the current state is maintained, or the gain control and the delay time period control are performed based on the information exhibiting a higher delay wave level.

In the above description, the vehicle information detection means **9** includes the speed detection means **91** and the position detection means **92**. Alternatively, the vehicle information detection means may include only the position detection means **92**. Even with such a structure, signals can be received while the vehicle is moving as well as at a fixed position.

In Figure **1**, the input means **1** includes the antenna **11** and amplification means **12**. According to the present invention, the number of antennas can be two or more. A delay section can be provided in correspondence to each of the plurality of antennas.

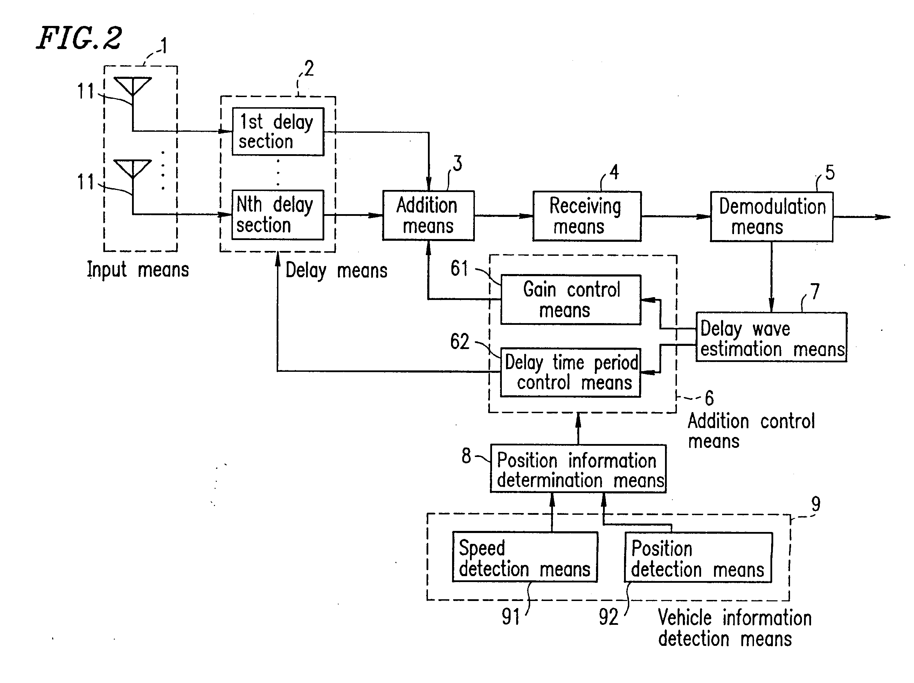

Figure **2** is a block diagram of a digital TV broadcast receiving apparatus, in which the input means **1** includes a plurality of antennas **11** and the delay means **2** includes a plurality of delay sections (e.g., 1st delay section, ..., Nth delay section) respectively in correspondence with the plurality of antennas **11**. The digital TV broadcast receiving apparatus operates in the following manner.

When the plurality of antennas **11** receive an identical broadcasting radio wave, the plurality of antennas **11** are interfered by multipath interferences in different manners. Consequently, the plurality of antennas **11** provide different output signals. Such signals have dips shown in Figure **7** at different positions (frequencies) with different depths.

In other words, a signal having dips at different positions or with different depths is obtained by adding a plurality of different receiving signals. As a result, the error ratio (i.e., ratio of wrong recognition of the receiving signals) can be reduced.

In the delay means **2**, the delay time period obtained by the addition control means **6** is relatively set in the first through Nth delay sections thereof. The addition means **3** sets the gain obtained by the addition control means **6** in accordance with the delayed signal. Except for the operations of the above-mentioned elements, the digital TV broadcast receiving apparatus shown in Figure **2** operates in substantially the same manner as the digital TV broadcast receiving apparatus shown in Figure **1**.

When the plurality of antennas **11** are installed at an interval which is about 1/4 or more of a wavelength of the TV signal, the correlation among the plurality of input signals can be reduced. Thus, by adding together the plurality of input signals from the plurality of antennas **11**, the quality of the receiving signal is improved.

When the plurality of antennas **11** are different in directivity or polarization, the correlation among the plurality of input signals can be further reduced. By adding together such a plurality of input signals, the quality of the receiving signal is further improved.

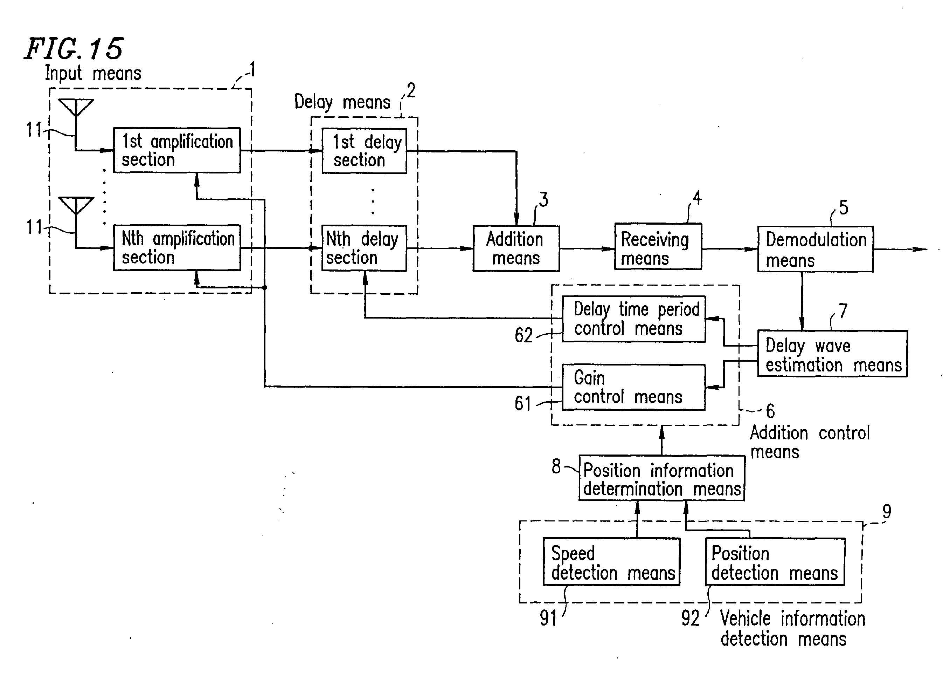

In Figure **2**, the plurality of signals output from the delay means **2** are each provided with a gain in accordance with a control signal from the gain control means **61**, and the resultant signals are added. Alternatively, as shown in Figure **15**, different gains can be given in the first through Nth amplification sections (not shown) in accordance with a control signal from the gain control means **61**.

As described above, a digital TV broadcast receiving apparatus in the first example adds signals from the delay means 2 to alleviate the dips in signals, and as a result, reduces the error ratio of the digital data.

An increase in the error ratio is avoided by setting the delay time period so as to avoid an influence of signal having a short delay time period.

An increase in the error ratio is also avoided by further avoiding dips in the signals more accurately. The dips in the signals are alleviated more accurately by obtaining an accurate delay wave by the delay wave estimation means **7**, the vehicle information detection means **9** and the position information determination means **8**.

Signals from a plurality of antennas can be switched for use in accordance with the error state as will be described with reference to Figure **10**.

Figure **10** is a flowchart illustrating an operation of switching antennas.

First, the C/N ratio (carrier/noise ratio) of a signal input to the antenna **11** (Figure **2**) and a receiving error generation state during a certain time period in the past (e.g., in one frame period) are obtained. When the C/N ratio is higher than a threshold value ("Yes" in step S100) and the error ratio is lower than the threshold value ("Yes" in step S101), the antenna is not switched (step S102).

Even when the error ratio is not lower than the threshold, if the error generation occurs in a short period of time in a burst manner instead of continuously ("Yes" in step S103), the antenna is not switched (step S102).

When the C/N ratio is not higher than the threshold value ("No" in step S100), or when the error ratio is not lower than the threshold value ("No" in step S101) and the error generation occurs continuously in a short period of time ("No" in step S103), the antenna is switched (step S104).

The timing for switching the antennas can be calculated based on the speed and position of the vehicle.

The antennas can be switched by the unit of a guard interval added to the OFDM signal. In this case, optimum timing for switching the antennas can be obtained with respect to the change in the signal receiving conditions while the vehicle is moving.

### (Example 2)

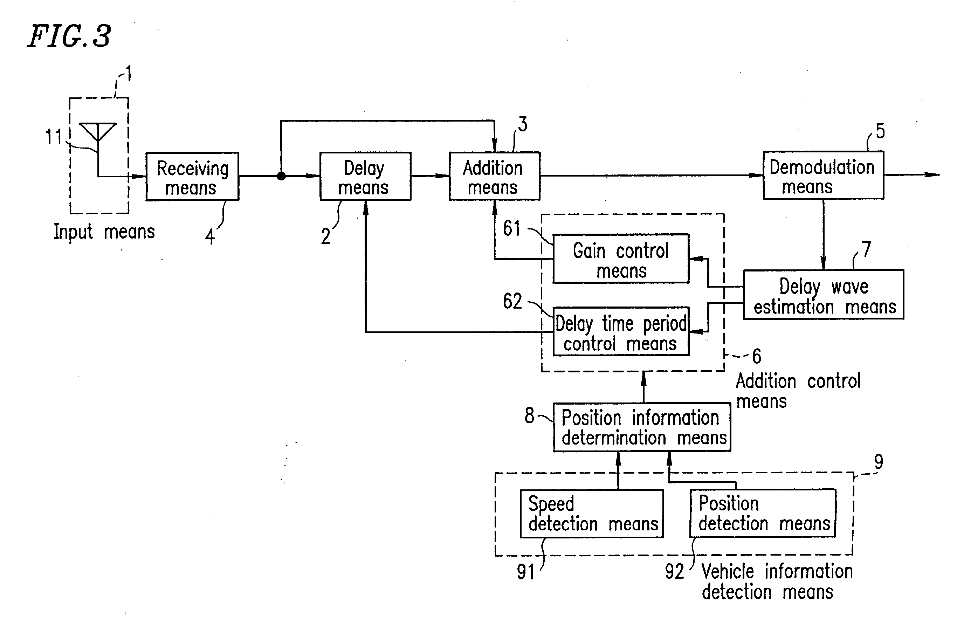

With reference to Figure **3**, a digital TV broadcast receiving apparatus in a second example according to the present invention will be described. Figure **3** is a block diagram of the digital TV broadcast receiving apparatus in the second example.

The digital TV broadcast receiving apparatus in the second example includes input means **1**, delay means **2**, addition means **3**, receiving means **4**, demodulation means **5**, addition control means **6**, and delay wave estimation means **7**. The addition control means **6** includes gain control means **61** and delay time period control means **62**. When the digital TV broadcast receiving apparatus in the second example is mounted on a mobile such as a vehicle, the apparatus further includes position information determination means **8** and vehicle information detection means **9**. The vehicle information detection means **9** includes speed detection means **91** and position detection means **92**. The digital TV broadcast receiving apparatus in the second example can include the position information determination means **8** and the vehicle information detection means **9** even when not mounted on a vehicle.

Whereas the apparatus in the first example includes the receiving means **4** connected immediately after the addition means **3**, the apparatus in the second example includes the receiving means **4** connected immediately after the input means **1**.

An exemplary signal receiving operation of the digital TV broadcast receiving apparatus mounted on a vehicle in the second example will be described.

A radio wave of TV broadcasting is converted into electric signals by, for example, the receiving antenna **11** in the input means **1**, and transferred to the receiving means **4**. The receiving means **4** extracts only the signal of a necessary frequency band among the signals obtained by the input means **1** and transfers the signal to the delay means **2** and the addition means **3**. The signal obtained by the receiving means **4** is delayed by the delay means **2** in accordance with a delay control signal sent from the addition control means **6** and transferred to the addition means **3**. The addition means **3** puts a gain to each of the signals sent from the input means **1** and the signal sent from the delay means **2** (weighting) in accordance with an addition control signal sent from the addition control means **6**, and then adds the two signals. The added signal is transferred to the demodulation means **5**. The addition can be performed by a simple operation such as, for example, addition and maximum value selection as in the first example. The demodulation means **5** demodulates and outputs the signal.

The delay wave estimation means **7** estimates a delay wave based on demodulation information sent from the demodulation means **5** and transfers the delay wave to the addition control means **6** in a manner similar to that described in the first example. The position information determination means **8** estimates a delay wave based on moving receiving information sent from the vehicle information detection means **9** and transfers the delay wave to the addition control means **6** in a manner similar to that described in the first example.

The addition control means **6** obtains control signals for the delay means **2** and the addition means **3** (delay time period and addition ratio) based on signals from the delay wave estimation means **7** and the position information determination means **8**.

In signal receiving, the addition control means **6** and the vehicle information detection means **9** operate in a manner similar to that described in the first example. In the apparatus in the second example, the frequency band of the signals processed by the delay means **2** and the addition means **3** is limited by the receiving means **1**. Accordingly, the processing performed by the delay means **2** and the addition means **3** is simplified as compared to that in the first example, and still an equivalent effect is obtained.

The frequency band of the signals processed by the delay means **2** is lower than that in the first example. Accordingly, when the delay means **2** delays a signal, the delay time period can be controlled by digital signal processing after the input signal is converted into a digital signal.

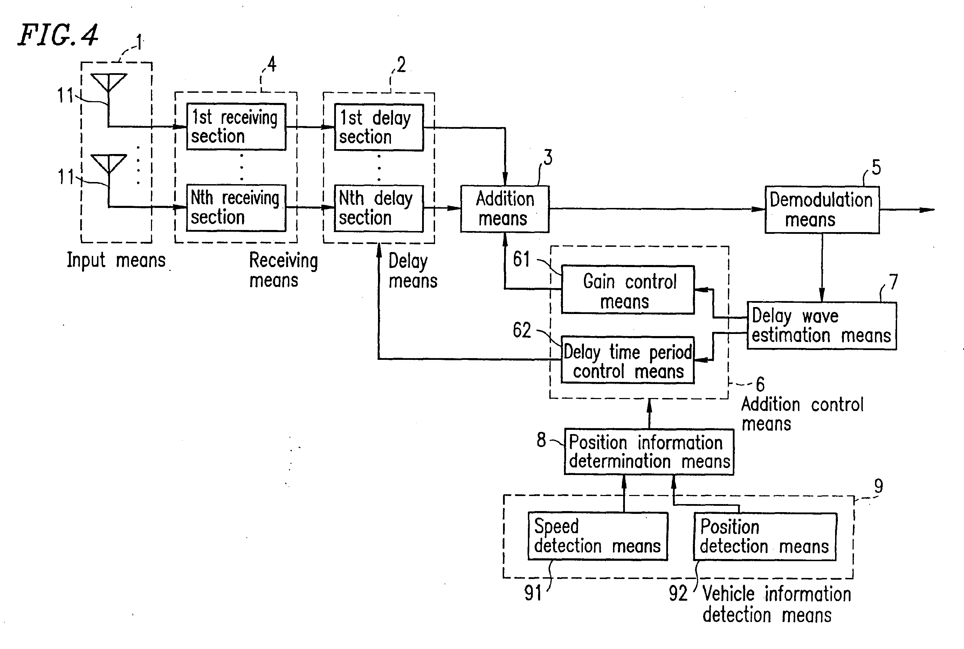

In the digital TV broadcast receiving apparatus in the second example, as shown in Figure **4**, the input means **1** can have a plurality of antennas **11** and the receiving means **4** can have first through Nth receiving sections. The delay means **2** can have first through Nth delay sections.

The operation of the digital TV broadcast receiving apparatus shown in Figure **4** is similar to the above-described operation and thus will not be described in detail.

When the plurality of antennas **11** receive an identical broadcasting radio wave in the apparatus shown in Figure **4**, the plurality of antennas **11** are interfered by multipath interferences in different manners. Consequently, the plurality of antennas **11** provide different output signals. Such signals have dips shown in Figure **7** at different positions (frequencies) with different depths (not shown). A signal having dips at different positions or with different depths is obtained by adding a plurality of receiving signals. As a result, the error ratio can be reduced.

### (Example 3)

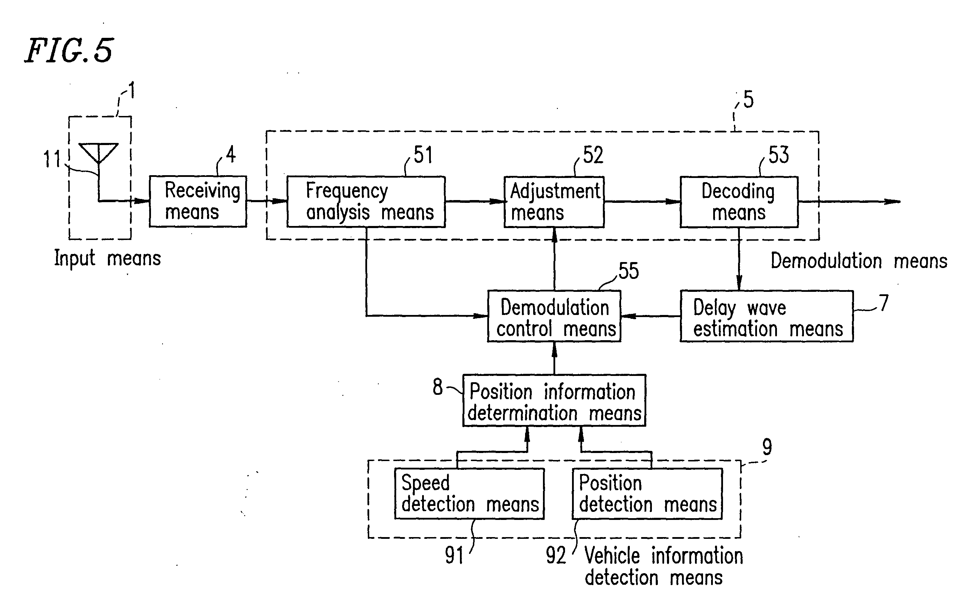

With reference to Figure **5**, a digital TV broadcast receiving apparatus in a third example according to the present invention will be described. Figure **5** is a block diagram of the digital TV broadcast receiving apparatus in the third example.

The digital TV broadcast receiving apparatus in the third example includes input means **1**, receiving means **4**, demodulation means **5**, delay wave estimation means **7**, and demodulation control means **55**. When the digital TV broadcast receiving apparatus in the third example is mounted on a mobile such as a vehicle, the apparatus further includes position information determination means **8** and vehicle information detection means **9**. The digital TV broadcast receiving apparatus in the third example can include the position information determination means **8** and the vehicle information detection means **9** even when not mounted on a vehicle.

An exemplary operation of the digital TV broadcast receiving apparatus in the third example at a fixed position and while moving will be described below with reference to Figure **5**. The operation of the position information determination means **8** and the vehicle information detection means **9** is the same as in the second example and will not be repeated.

A radio wave of TV broadcasting is converted into electric signals by, for example, the receiving antenna **11** in the input means **1**, and transferred to the receiving means **4**. The receiving means **4** extracts only the signal of a necessary frequency band among the signals obtained from the input means **1** and transfers the signal to the demodulation means **5**. The demodulation means **5** demodulates the signal from the receiving means **4** and outputs the resultant digital signal, and also transfers a demodulation state to the delay wave estimation means **7**.

The operation of the demodulation means **5** will be described in detail.

The demodulation means **5** includes frequency analysis means **51**, adjustment means **52** and decoding means **53**.

The signal obtained by the receiving means **4** is processed by frequency analysis by the frequency analysis means **51** in a frequency analysis method such as, for example, FFT, real FFT, DFT or FHT. The frequency-analyzed signal is transferred to the adjustment means **52**. The frequency-analyzed signal can be represented by, for example, the frequency and the magnitude of the signal.

The adjustment means **52** manipulates the signal on a frequency axis obtained by the frequency analysis means **51** based on a control signal from the demodulation control means **55.** The manipulation can be performed by, for example, applying the signal obtained from the frequency analysis means **51** to a transfer function, based on the signal from the demodulation control means **55**, performing calculation using a filter, or emphasizing a specific frequency component or interpolating a frequency component which is considered to be deleted. The decoding means **53** decodes the signal obtained by the adjustment means **52** into a digital code.

The delay wave estimation means **7** estimates a delay wave information based on the signal obtained from the demodulation means **5**. At this point, a frequency spectrum obtained from the frequency analysis means **51** or a pilot signal obtained during decoding performed by the decoding means **53** is referred to.

Figure **7** is a graph showing a frequency spectrum of the receiving signal. In general, in the OFDM modulation mode used in digital TV broadcasting, the frequency spectrum is flat. When a delay wave exists, as shown in Figure **7**, dips are generated. Accordingly, the magnitude and delay time period of the delay wave can be estimated.

The magnitude and the delay time period can be estimated from the phase shift or deletion of the pilot signal.

The demodulation control means **55** controls the adjustment means **52** based on delay wave information obtained by the delay wave estimation means **7** or the position information determination means **8**. The demodulation control means **55** determines a control parameter(s) corresponding to the adjustment means **52** and transfers the control parameter(s) to the adjustment means **52**. For example, when the adjustment means **52** requires a transfer function regarding the delay wave, the demodulation control means **55** finds the transfer function corresponding to the delay wave and transfers the transfer function to the adjustment means **52**. When the adjustment means **52** is a filter, the demodulation control means **55** transfers a filter coefficient(s) to the adjustment means **52**. When the adjustment means **52** has a structure of interpolating, the demodulation control means **55** transfers an interpolating value to the adjustment means **52**. The position information determination means **8** and the vehicle information detection means **9** each have a similar structure to that in the first example.

As described above, in the third example, the adjustment means **52** acts to reduce an influence of the delay wave. Therefore, accurate decoding is realized and the error ratio of the received digital signals is decreased.

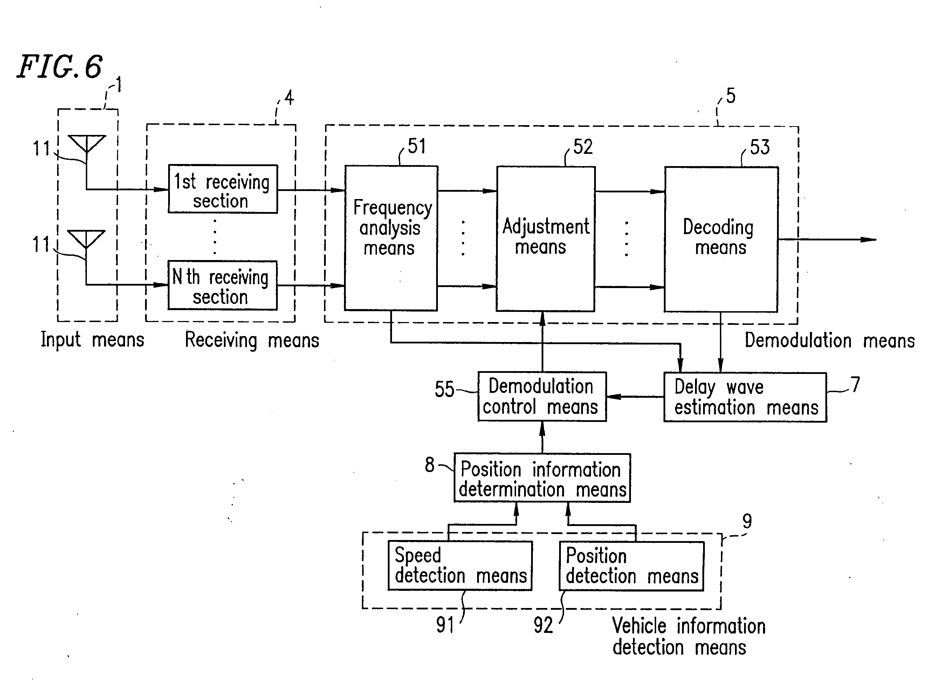

In the digital TV broadcast receiving apparatus in the third example, as shown in Figure **6**, the input means **1** can have a plurality of antennas **11** and the receiving means **4** can have first through Nth receiving sections. Although Figure **6** shows one frequency analysis means **51**, one adjustment means **52** and one decoding means **53**, at least one of the means **51, 52** or **53** can be provided in the number corresponding to the number of the antennas **11**. The number of the means depends on the structure thereof. For example, even when the digital TV broadcast receiving apparatus shown in Figure **6** includes one frequency analysis means **51**, the digital TV broadcast receiving apparatus normally operates by a selector (not shown) for selecting one signal to be processed by the frequency analysis means **51** among a plurality of signals output from the first through the Nth receiving sections. The same applies to the number of the adjustment means **52** and the decoding means **53**.

In the digital TV broadcast receiving apparatus shown in Figure **6**, frequency analysis is performed for each signal output from the input means **1**. Accordingly, the magnitude and the delay time period of the delay wave corresponding to each signal output from the input means **1** can be estimated. Thus, a signal which is received in a best state can be selected by the adjustment means **52**.

The above-described adjustment using the transfer function, filtering or interpolation can be performed on a signal-by-signal basis so that a plurality of signals are decoded by the decoding means **53**.

In the decoding means **53** or the adjustment means **52**, only a signal having a frequency spectrum received in a good state can be selected and processed based on the frequency analysis results of the signals from each of the antennas **11**. In such a case, satisfactory demodulation of a digital code is realized.

As described above, provision of a plurality of antennas **11** in the apparatus shown in Figure **6** reduces the receiving errors.

### (Example 4)

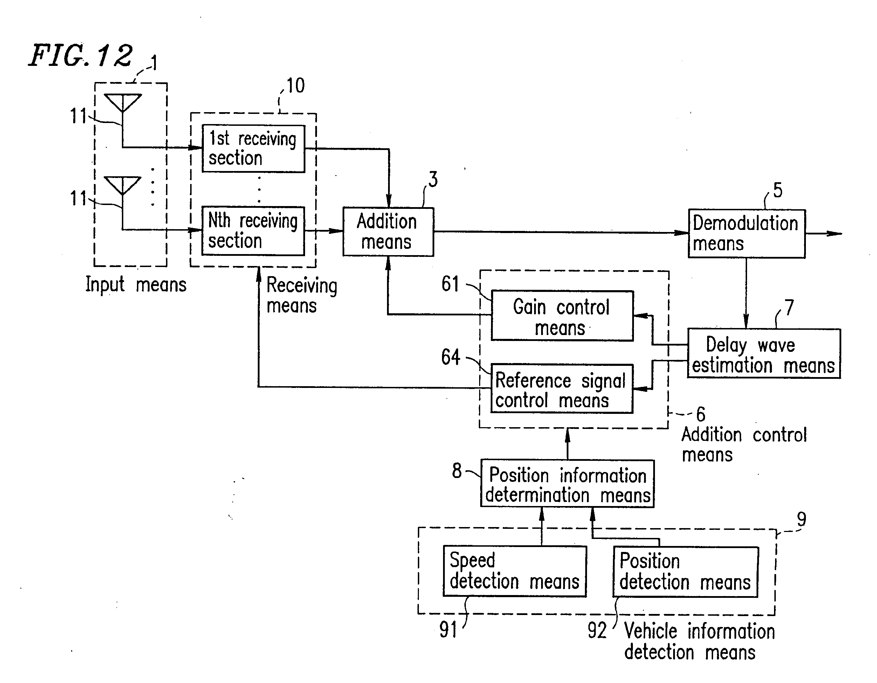

A digital TV broadcast receiving apparatus in a fourth example according to the present invention will be described with reference to Figure **12**. Figure **12** is a block diagram of the digital TV broadcast receiving apparatus in the fourth example.

As shown in Figure **12**, the digital TV broadcast receiving apparatus in the fourth example includes input means **1**, addition means **3**, receiving means **10**, demodulation means **5**, addition control means **6**, and delay wave estimation means **7**.

When the digital TV broadcast receiving apparatus shown in Figure **12** is mounted on a vehicle, the apparatus further includes position information determination means **8** and vehicle information detection means **9**. The digital TV broadcast receiving apparatus in the fourth example can include the position information determination means **8** and the vehicle information detection means **9** even when not mounted on a vehicle.

The digital TV broadcast receiving apparatus shown in Figure **12** does not include the delay means **2**. Identical elements with those described with reference to Figure **4** will not be described in detail.

The receiving means **10** detects signals transferred to the input means **1** in the VHF, UHF or other band and sends the detected signal to the demodulation means **5**. The receiving means **10** converts the signal into a signal of a frequency band which can be processed by the demodulation means **5**.

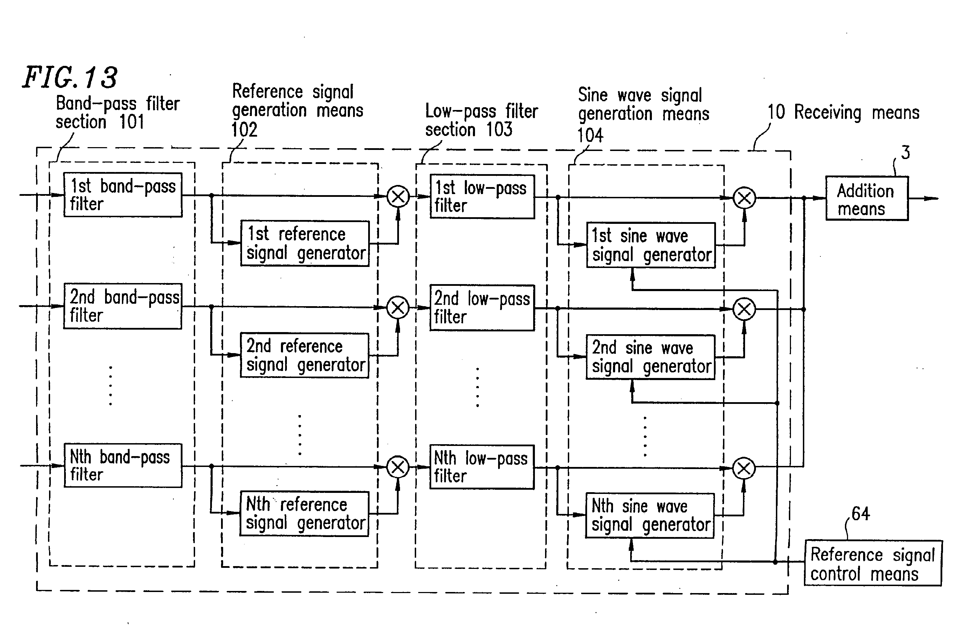

The receiving means **10** for detecting the signals will be described in detail. Figure **13** is a block diagram illustrating an exemplary structure of the receiving means **10** acting as a detector. The receiving means **10** includes a band-pass filter section **101**, reference signal generation means **102**, a low-pass filter section **103**, and sine wave signal generation means **104**. The band-pass filter section **101** includes first through Nth band-pass filters. The reference signal generation means **102** includes first through Nth reference signal generators. The low-pass filter section **103** includes first through Nth low-pass filters. The sine wave signal generation means **104** includes first through Nth sine wave signal generators.

The receiving means **10** operates, for example, in the following manner.

A plurality of receiving signals obtained by the input means (Figure 12) are caused to pass through the band-pass filter section **101.** The reference signal generation means **102** generates a sine wave signal having the same frequency as the frequency of the receiving signal. When the frequency of the receiving signal is 500 MHz, the first reference signal generator, for example, of the reference signal generation means **102** generates a sine wave signal having a frequency of 500 MHz. The first through the Nth reference signal generators of the reference signal generation means **102** can each generate a reference signal.

Then, the signals which have passed through the band-pass filter section **101** are multiplied by sine wave signals obtained by the reference signal generation means **102.** The resultant signals are caused to pass through the low-pass filter section **103** for frequency conversion. The frequency-converted signals are output from the low-pass filter section **103.**

The sine wave signal generation means **104** generates a sine wave signal in accordance with phase information obtained by reference signal control means **64**. The sine wave signal generation means **104** generates signals each having a frequency of as low as about 0 to several tens of kilohertz. For example, the first sine wave generator generates a signal having a frequency of 0 Hz (DC signal), the second sine wave generator generates a signal having a frequency of 10 Hz, and the Nth sine wave generator generates a signal having a frequency of 15 Hz. The plurality of signals generated by the sine wave signal generation means **104** are multiplied by the plurality of signals passed through the low-pass filter section **103**.

As described above, the receiving means **10** can vary each of the phases of a plurality of signals obtained from the input means **1** with respect to one another time-wise. Accordingly, the digital TV broadcast receiving apparatus shown in Figure **12** can avoid the state that the input signals for receiving means **10** are cancelled out excessively in the case where the input signals have a 180 degree phase difference to each other.

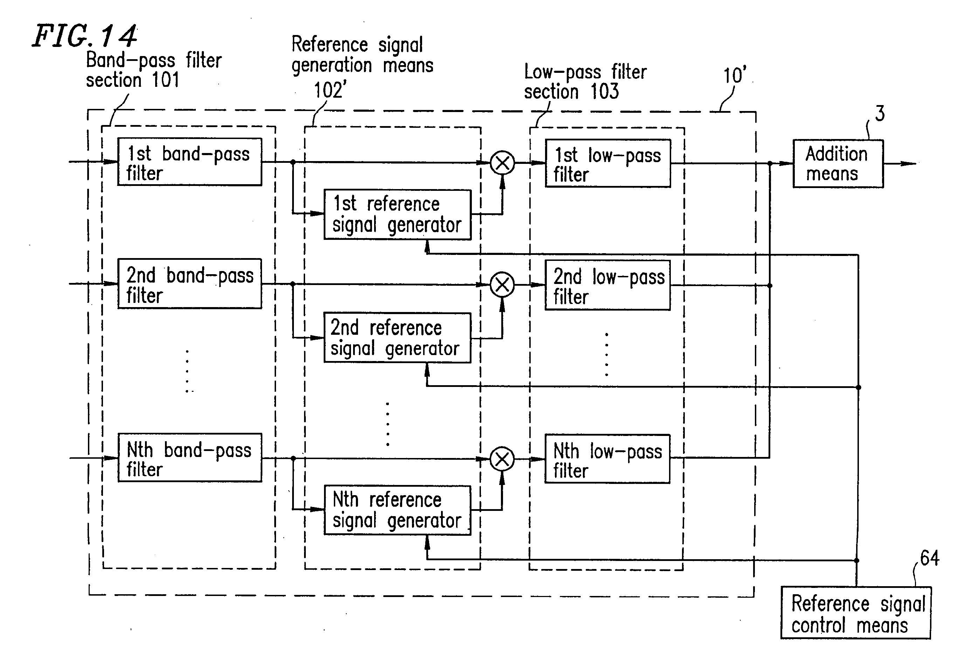

Figure **14** is a block diagram illustrating an exemplary structure of another receiving means **10'** acting as a detector. Whereas the receiving means **10** shown in Figure **13** requires the sine wave signal generation means **104** for shifting the phase, the receiving means **10'** shown in Figure **14** can shift the phase using reference signal generation means **102'**.

The receiving means **10'** includes a band-pass filter section **101**, reference signal generation means **102**', and a low-pass filter section **103**. The receiving means **10'** does not include the sine wave signal generation means. The reference signal generation means **102'** includes first through Nth reference signal generator as in the receiving means **10.**

The reference signal generation means **102'** adjusts a frequency of the sine wave signal generated in accordance with phase information output by the reference signal control means **64**. For example, when the frequency of the receiving signal (TV signal) is 500 MHz, the first reference signal generator of the reference signal generation means **102'** generates a sine wave signal having a frequency of 500 MHz, and the second reference signal generator of the reference signal generation means **102'** generates a sine wave signal having a frequency of 500,000,010 Hz. That is, the reference signal generation means **102'** gives a slight difference to the frequency of the TV signal. Accordingly, the receiving means **10'** shown in Figure **14** has the same effect as that of the receiving means **10** shown in Figure **13**.

In the reference signal generation means shown in Figures **13** and **14**, the frequencies of a plurality of reference signals generated by the first through the Nth reference signal generators (first through Nth reference signals) need to be equal to the frequency of the signal received by the respective reference signal generators; or a difference between the frequency of the signal generated by the reference signal generators and the frequency of the signal received by the respective reference signal generators needs to be in a prescribed range. Such conditions are not always fulfilled since there are a plurality of reference signals.

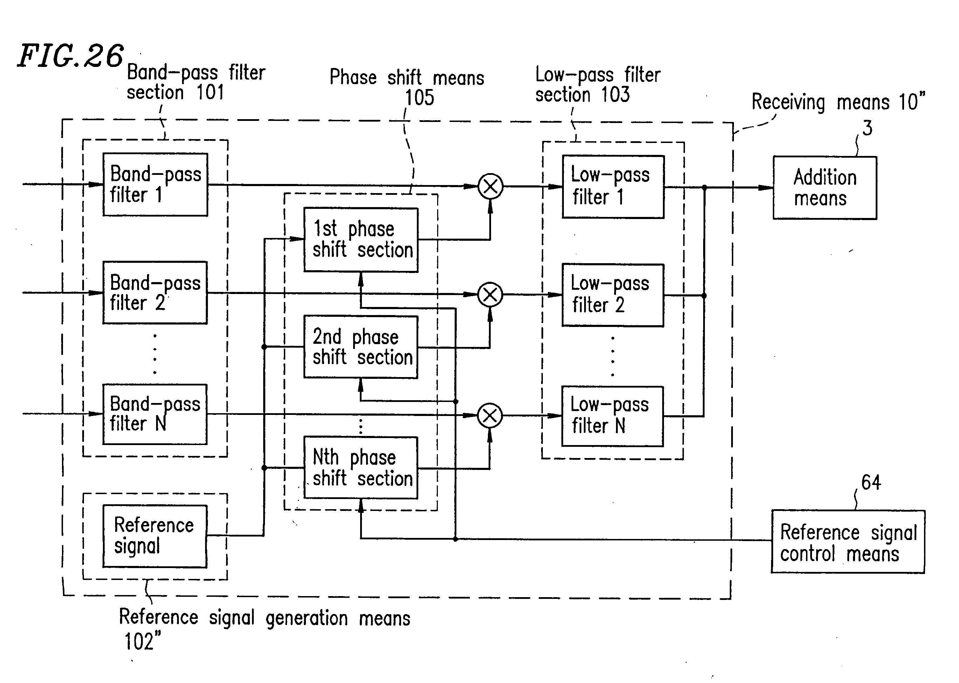

In such a case, receiving means **10"** shown in Figure **26** is effective.

The receiving means **10"** includes a band-pass filter section **101**, reference signal generation means **102",** a low-pass filter section **103**, and phase shift means **105**. The band-pass filter section **101** and the low-pass filter section **103** have the same structures as those of the receiving means **10** (Figure **13**). The phase shift means **105** includes first through Nth phase shift sections. The first through Nth phase shift sections each control the phase of the reference signal in accordance with a control signal from the reference signal control means **64**. The phase shift means **105** can be realized by, for example, a variable reactance element. The first through the Nth phase shift sections can independently vary the phase of the reference signal in accordance with a control signal (e.g., control voltage) from the reference signal control means **64**.

In the receiving means **10",** only one reference signal is generated by the reference signal generation means **102"**. Accordingly, the receiving means **10"** allows the phase of the reference signal to be slightly shifted with respect to the frequency of the signal received by the reference signal generator.

A method for controlling the phase by the phase shift means **105** will be described in detail later.

### (Example 5)

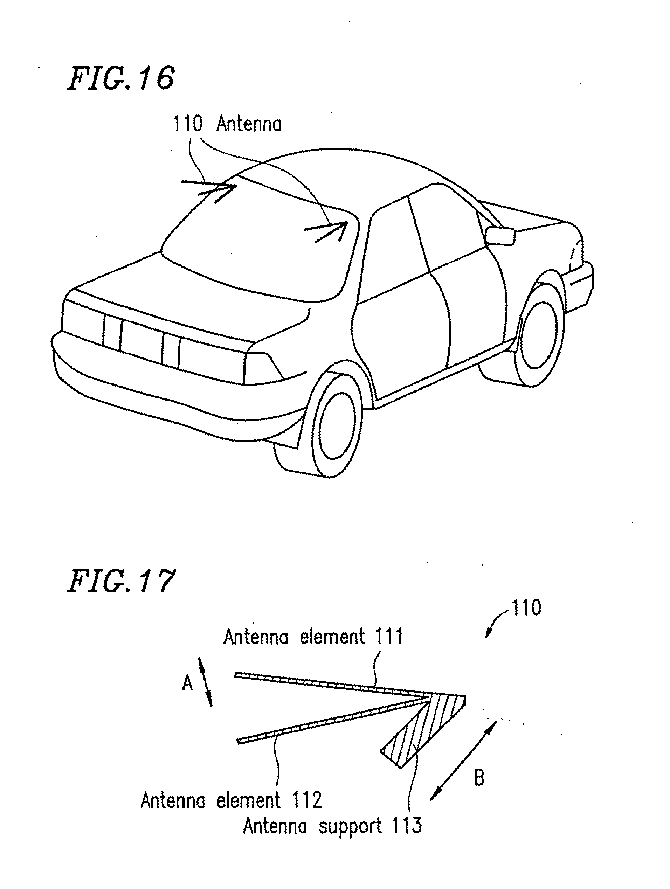

A digital TV broadcast receiving apparatus in a fifth example according to the present invention will be described with reference to Figures **16** and **17.**

Figure **16** shows an installment state of an antenna **110** used as input means. Figure **17** is a detailed view of the antenna **110.** Except for the input means, the digital TV broadcast receiving apparatus in the fifth example can have any one of the structures described in the first through seven examples in this specification.

An operation of the antenna **110** will be described in detail with reference to Figures **16** and **17**.

As shown in Figure 16, the antenna **110** is installed on a top surface of a trunk or along a rear glass of a vehicle. In this example, the antenna **110** is structured so as to be movable while the antenna **110** is receiving a radio wave.

As shown in Figure **17**, the antenna **110** includes antenna elements **111** and **112** and an antenna support **113**. A connection portion of the antenna elements **111** and **112** and the antenna support **113** is structured to allow the antenna elements **111** and **112** and the antenna support **113** to be movable with respect to each other. Thus, the antenna elements **111** and **112** are movable in directions represented by arrows A and B in Figure **17** by a remote control using a motor or the like.

By controlling the antenna **110** so as to be constantly moved while the digital TV broadcast receiving apparatus is receiving data while moving, the transfer path characteristics of a transmitting antenna (e.g. antenna of the broadcasting station) and a receiving antenna (e.g., antenna **110**) are different time-wise. Due to such a system, when a signal is received under the multipath circumstances, the state of the interferences (e.g., dip in the frequency direction) can be varied. In the case where a plurality of signals which are being added together have a 180 degree phase difference and thus the signals are cancelled by each other when added, the ratio of errors, which are usually generated when such a signal is received, can be reduced by changing the positions of the antenna elements **111** and **112** to varying signal characteristics of the receiving signal. Such an arrangement of the antenna elements **111** and **112** in this example is advantageous in the case where the receiving signals continue canceling each other for a certain period or more when the digital TV broadcast receiving apparatus is moving at a low speed or stops. The range in which the antenna **110** is movable can be, for example, about 1/4 of the wavelength of the transmitting signal of the TV signal which is to be received.

Alternatively, the positions of the antenna elements **111** and **112** can be fixed in accordance with the wavelength of the signal which is demanded to be received when the channel to be received is determined. The positions can be determined in, for example, the following manner. The positions of the antenna elements **111** and **112** are moved with a range of about 1/4 of the wavelength of the TV signal which is desired to be received. The signals output from the antenna elements **111** and **112** are added together. The positions of the antenna elements **111** and **112** are fixed when improved receiving characteristics are obtained. By such an arrangement, it is highly likely that the signals output from the antenna elements **111** and **112** are avoided from being opposite in phase. It is also highly likely that the signals have different dip positions or the like from each other, the dips being caused by the multipath interferences.

When the position of the antenna **110** is changed in accordance with the frequency of the receiving signal, the receiving characteristics are improved. In the above example, the antenna **110** is movable. Alternatively, the two antenna elements **111** and **112** can be close to each other at fixed positions. In this case, the same effect is obtained.

### (Example 6)

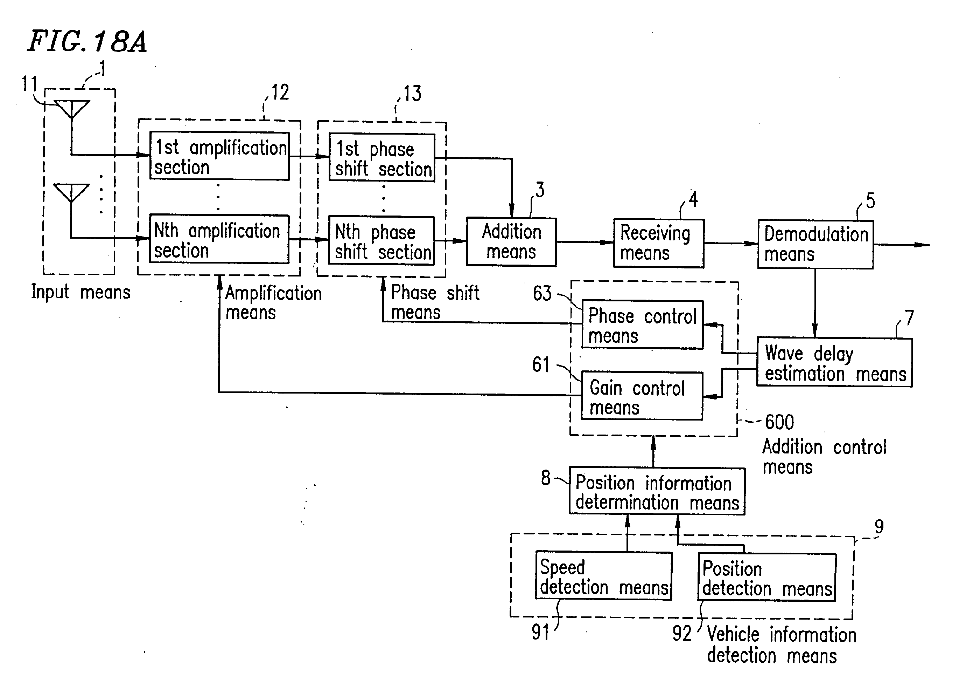

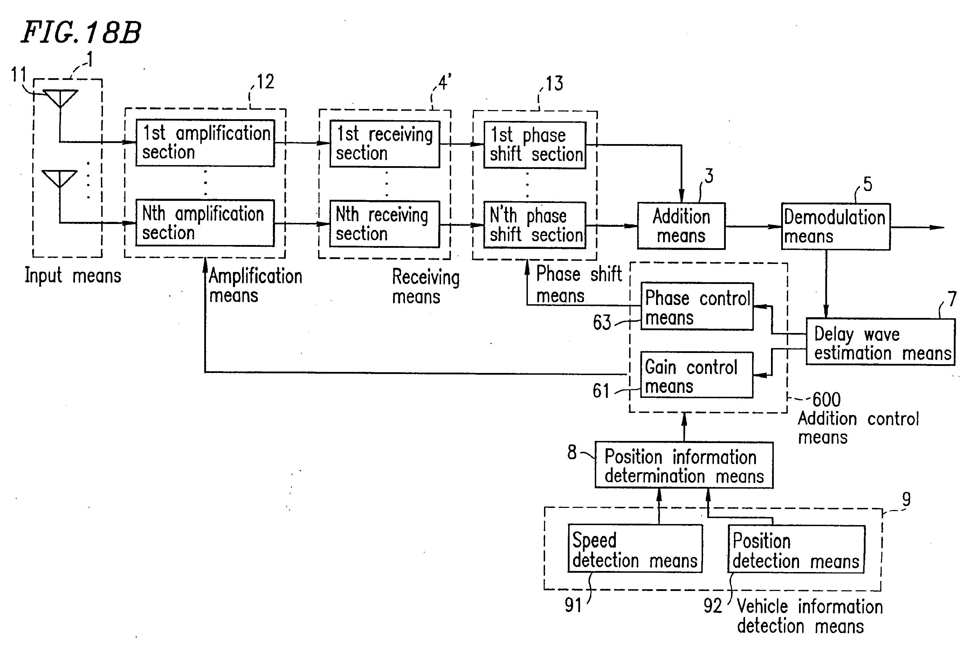

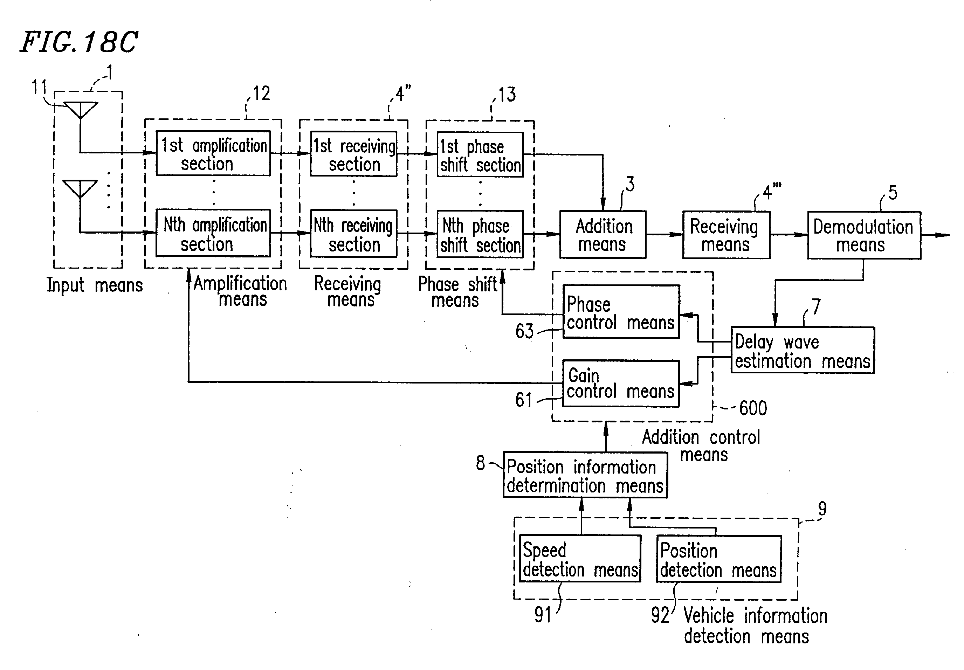

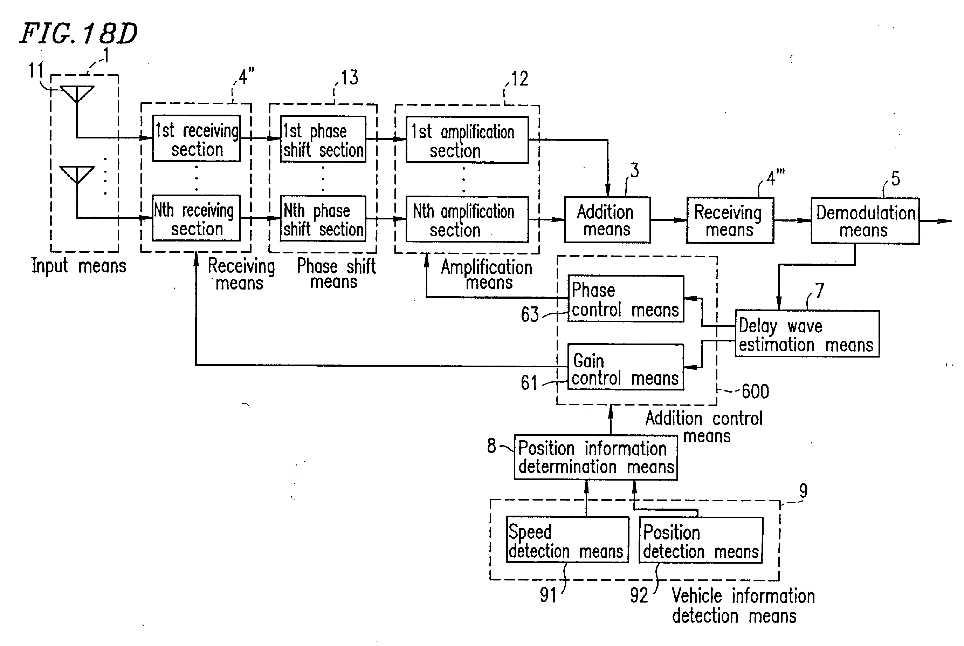

A digital TV broadcast receiving apparatus in a sixth example according to the present invention will be described with reference to Figures **18A, 18B, 18C** and **18D.** Figures **18A, 18B, 18C** and **18D** are each a block diagram illustrating an exemplary structure of the digital TV broadcast receiving apparatus in the sixth example. Figures **18A, 18B, 18C** and **18D** each show alternatives, and elements represented by reference numerals with a prime (') or double prime (") correspond to an element represented by the same reference numeral without a prime.

As shown in Figures **18A, 18B, 18C** and **18D**, the digital TV broadcast receiving apparatus in the sixth example includes input means **1**, addition means **3**, receiving means **4**, demodulation means **5**, delay wave estimation means **7**, amplification means **12**, phase shift means **13**, and addition control means **600**. The addition control means **600** includes gain control means **61** and the phase control means **63**. The amplification means **12** includes first through Nth shift phase sections. The phase shift means **13** includes first through Nth phase shift sections.

In the sixth example, when the digital TV broadcast receiving apparatus is mounted on a vehicle, the apparatus further includes position information determination means **8** and vehicle information detection means **9**. The vehicle information detection means **9** includes speed detection means **91** and position detection means **92**. The digital TV broadcast receiving apparatus can include the vehicle information detection means **9** even when not mounted on a vehicle.

The digital TV broadcast receiving apparatus shown in each of Figures **18A, 18B, 18C** and **18D** includes amplification means **12** and the phase shift means **13** instead of the delay means **2** shown in Figure **2**, and also includes the addition control means **600** instead of the addition control means **6** shown in Figure **2**.

Hereinafter, an exemplary operation of the digital TV broadcast receiving apparatus in the sixth example will be described with reference to Figure **18A.**

A radio wave for TV broadcasting is converted into a plurality of electric signals by, for example, a receiving antenna **11** in the input means **1** and then transferred to the amplification means **12**. The amplification means **12** amplifies a gain of each signal obtained from the input means 1 in accordance with control information obtained from the gain control means **61**. The phase shift means **13** shifts the phase of each signal sent from the amplification means **12** in accordance with a phase control signal obtained from the phase control means **63.** The addition means **3** adds the signals sent from the phase shift means **13**. The receiving means **4** extracts a component of a necessary frequency band from the signal added by the addition means **3** and transfers the extracted component to the demodulation means **5.** The demodulation means **5** demodulates the component from the receiving means **4** and outputs the resultant digital data. The demodulation means **5** also outputs information on a delay wave included in a receiving signal from the receiving means **4** to the delay wave estimation means **7**. The delay wave estimation means **7** outputs delay wave information included in the receiving signal using the information obtained from the demodulation means **5**.

The addition control means **600** obtains a control signal for controlling the amplification means **12** and a control signal for controlling the phase shift means **13** using the information obtained from at least one of the delay wave estimation means **7** and the position information determination means **8**. The operation of the input means **1,** the addition means **3**, the receiving means **4**, the demodulation means **5**, the delay wave estimation means **7**, the position information determination means **8**, the vehicle information detection means **9** and the amplification means **12** is the same as described in the previous examples and will not be repeated.

Hereinafter, an exemplary operation of the addition control means **600** will be described in detail. As described above, the addition control means **600** includes the gain control means **61** and the phase control means **63**.

The gain control means **61** inputs information on the receiving signal from at least one of the delay wave estimation means **7** and the position information determination means **8**. The gain control means **61** determines, for example, whether or not the receiving signal includes a delay wave component (interference component). When the delay wave is determined to exist, the gain control means **61** obtains information on the strength, delay time period and phase of the delay wave, and moving state and past receiving interference state of the mobile. The gain control means **61** is provided mainly for, when a receiving signal is interfered by a delay wave or the like, supplying the amplification means **12** with information for controlling the gain and thus for improving the characteristics of the receiving signal. For example, when the receiving signal is significantly interfered, the gain control means **61** can supply each of a plurality of input signals with a gain. When the receiving signal is interfered less significantly, the gain control means **61** can supply one of the input signals with a gain and select the one signal. As a result, as described in the first example, the frequency characteristics of the signal which has been subjected to frequency selective fading can be improved. Even when the level of the input signal is insufficient, the amplification means **12** can amplify the signal level.

Next, an exemplary operation of the phase control means **63** will be described. The phase control means **63** determines a phase shift amount given by the phase shift means **13** to each of signals from the amplification means **12**, using the information obtained from at least one of the delay wave estimation means **7** and the position information determination means **8.** The phase shift means **13** shifts the phase of a plurality of input signals in accordance with a control signal obtained from the phase control means **63.** Since the plurality of signals processed with phase shift by the phase shift means **13** are added together by the addition means **3**, the probability at which signals with a 180 degree phase difference are added together to cancel each other is lower as compared to the system in which signals from the amplification means **12** are added together.

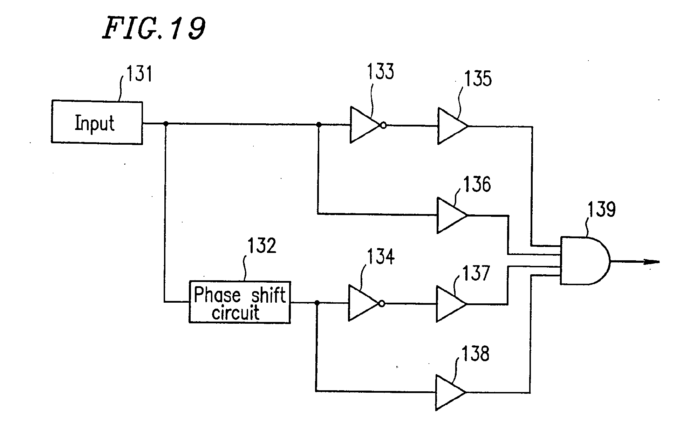

Hereinafter, an exemplary structure and operation of the phase shift means **13** will be described in detail. Figure **19** is a block diagram illustrating an exemplary structure of the phase shift means **13.**

As shown in Figure **19,** the phase shift means **13** includes an input section **131,** a phase shift circuit **132**, negation circuits **133** and **134,** multiplication circuits **135, 136, 137** and **138**, and an addition circuit **139**. The negation circuits 133 and 134 invert a signal received. The multiplication circuits **135, 136, 137** and **138** appropriately amplifies a signal received.

Signals received by the input section **131** are sent to the phase shift circuit **132**, the negation circuit **133,** and the multiplication circuit **136.** The signals sent to the phase shift circuit **132** are given a delay in phase of, for example, 90 degrees. One of the signals which are output from the phase shift circuit **132** is sent to the addition circuit **139** through the negation circuit **134** and the multiplication circuit **137**. The other signal which is output from the phase shift circuit **132** is sent to the addition circuit 139 through the multiplication circuit **138**.

The signal sent to the negation circuit **133** is inverted by the negation circuit **133** and sent to the addition circuit **139** through the multiplication circuit **135.** The signal sent to the multiplication circuit **136** is amplified by the multiplication circuit **136** and sent to the addition circuit **139**. The addition circuit **139** receives and adds the signals.

As a result, the signal output from the addition circuit **139** can have an arbitrary phase shift from 0 degrees to 360 degrees with respect to the signals input to the phase shift circuit **132**. A gain value given to the multiplication circuits **135, 136, 137** and **138** may be varied time-wise in order to vary the phase of the signal output from the addition circuit **139** time-wise.

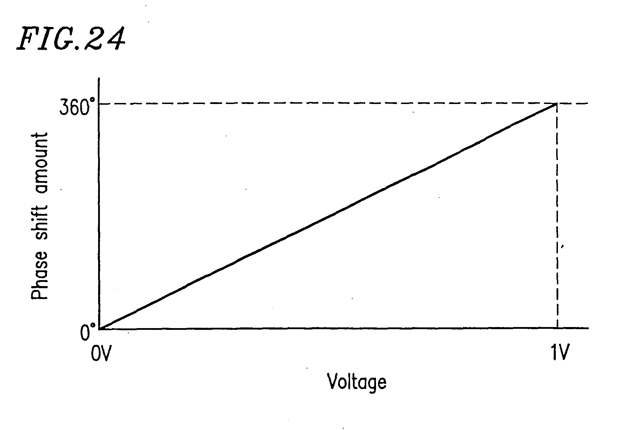

The phase shift circuit **132** can be realized by voltage-controlling a variable reactance element. Figure **24** is a graph illustrating the relationship between a voltage applied to a variable reactance element and the phase shift amount varying in accordance with the voltage. A variable reactance element which can linearly vary the phase of the input signal from 0 degrees to 360 degrees with respect to a voltage of 0 V to 1 V as shown in Figure **24** can be used in each of first through Nth phase shift sections in the phase shift means **13** shown in each of Figures **18A, 18B, 18C** and **18D.**

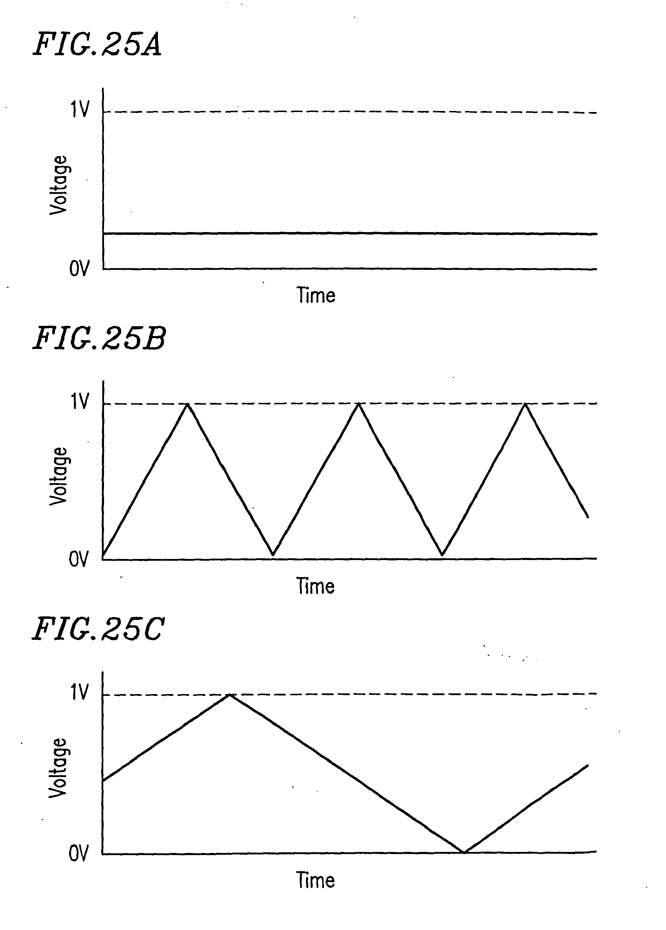

An exemplary method for varying the phase time-wise will be described with reference to Figures **25A, 25B** and **25C.** Figures **25A, 25B** and **25C** show the relationship between the voltage applied to a phase shift section and time. When, for example, the phase shift circuit **132** (Figure **19**) includes first, second and third phase shift sections, a signal shown in Figure **25A** is input to the first phase shift section, a signal shown in Figure **25B** is input to the second phase shift section, and a signal shown in Figure **25C** is input to the third phase shift section. The phase of each signal can be independently varied. In the above description, the phase is varied from 0 degrees to 360 degrees, but it is not necessary to vary the phase over 360 degrees.

The phase shift circuit **132** (Figure **19**) can alternatively be realized by changing the signal path length as described in the first example, or using an SAW element.

Due to the above-described structure, the phase of each of a plurality of signals can be controlled in accordance with a control signal obtained from the phase control means **63**. Since such a system provides the same effect as the effect by the delay means described in the previous examples, it is prevented that signals with a 180 degree phase difference cancel each other when being added together. As compared to the case where a plurality of signals input through an antenna are simply added together, interferences on receiving signals is significantly reduced.

In the structure shown in Figure **18A**, signals obtained by the input means **1** are processed by the amplification means **12** and the phase shift means **13,** then added by the addition means **3**, and processed with frequency conversion by the receiving means **4**.

In this example, as shown in Figure **18B**, the receiving means **4'**, including first through Nth receiving sections, can be located immediately after the amplification means **12**, and the phase shift means **13** can be located immediately after the receiving means **4'**. In the structure shown in Figure **18B,** the phase shift by the phase shift means **13** and the addition by the addition means **3** are performed in the frequency band of a baseband signal.

As shown in Figure **18C,** receiving means **4"** can be used instead of the receiving means **4**. In the structure shown in Figure **18C**, signals received by the input means **1** are amplified by the amplification means **12** and converted to signals in a frequency band between a frequency of the signals and the frequency band of the baseband signal (i.e., intermediate frequency signal). Later, the intermediate frequency signal will be converted by the receiving means **4"** into a signal of a frequency which can be processed by the demodulation means **5** (e.g., baseband signal).

In the structure shown in Figure **18C,** the phase shift means **13** is located immediately after the receiving means **4"**. Accordingly, the frequency band of the signal to be processed by the phase shift means **13** can be lower than that in the structure in Figure **18A.** When the signals are converted into intermediate frequency signals by the receiving means **4"** , the signals can be converted into signals in a constant frequency band. In such a case, even when signals of a different channel are desired, the phase control method used by the phase shift means **13** does not need to be changed in accordance with the frequency of the channel desired.

In lieu of the delay means described in the first through fourth examples, a structure for varying the characteristics of the receiving signal in the intermediate frequency band can be used. The same effect as that of the sixth example is provided.

In the structures shown in Figures **18A, 18B** and **18C**, the amplification means **12** is located immediately after the input means **1**, and thus the gain of each signal is controlled by a control signal from the gain control means **61.** Alternatively, as shown in Figure **18D**, the gain of a signal which is output from the phase shift means **12** can be controlled.

The structures shown in Figures **18A, 18B** and **18C,** can be simplified by deleting the gain control means **61**. In this case, the signals are amplified by a constant level.

### (Example 7)

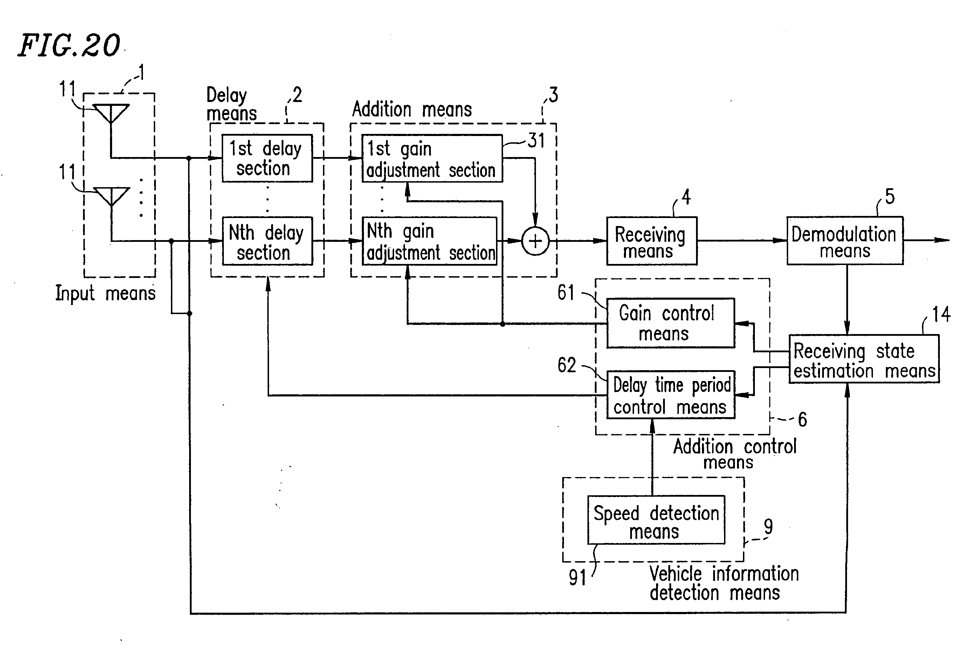

A digital TV broadcast receiving apparatus in a seventh example according to the present invention will be described with reference to Figure **20**. Figure **20** is a block diagram illustrating a structure of the digital TV broadcast receiving apparatus in the seventh example.

As shown in Figure **20**, the digital TV broadcast receiving apparatus in the seventh example includes input means **1**, delay means **2**, addition means **3**, receiving means **4**, demodulation means **5**, addition control means **6**, and receiving state estimation means **14**. The addition control means **6** includes gain control means **61** and the delay time period control means **62**. The delay means **2** includes first through Nth delay sections. The addition means **3** includes first through Nth gain adjustment sections **31**.

When the digital TV broadcast receiving apparatus in the seventh example is mounted on a vehicle, the apparatus further includes vehicle information detection means **9**. The vehicle information detection means **9** includes speed detection means **91**. The digital TV broadcast receiving apparatus can include the vehicle information detection means **9** when not mounted on a vehicle.

The digital TV broadcast receiving apparatus shown in Figure **20** includes the receiving state estimation means **14** instead of the delay wave estimation means **7** shown in Figure **2**. The vehicle information detection means **9** has a different structure from that shown in Figure **2**. The addition means **3** includes first through Nth gain adjustment sections **31.**

Hereinafter, an exemplary operation of the digital TV broadcast receiving apparatus in the seventh example will be described with reference to Figure **20**.

A radio wave for TV broadcasting is converted into a plurality of electric signals by, for example, a receiving antenna **11** in the input means **1** and transferred to the delay means **2**. The delay means **2** supplies the signals with a delay in accordance with a control signal obtained from the delay time period control means **62.** The signals with a delay are transferred to the addition means **3**. The addition means **3** adjusts the addition ratio of the plurality of signals obtained from the delay means **2** in accordance with the gain control means **61**. The addition means **3** then adds the plurality of signals. The receiving means **4** extracts a component of a necessary frequency band from the signal added by the addition means **3** and transfers the extracted component to the demodulation means **5**. The demodulation means **5** demodulates the component from the receiving means **4** and outputs the resultant digital data.

The demodulation means **5** outputs information on the demodulation state to the receiving state estimation means **14** in order to allow the receiving state estimation means **14** to estimate the receiving state (radio state). The demodulation means **5** determines the receiving state based on the information on input state, such as, for example, level change of the signals output from the input means **1**, and/or information on the demodulation state obtained by the demodulation means **5**.

As described above, the addition control means **6** includes the gain control means **61** and the delay time period control means **62**. The gain control means **61** supplies a gain adjustment section **31** with gain control information, using information obtained from at least one of the receiving state estimation means **14** and the vehicle information detection means **9**. The delay time period control means **62** supplies the delay means **2** with delay time period control information, using information obtained from at least one of the receiving state estimation means **14** and the vehicle information detection means **9**. The operation of the input means **1**, the delay means **2**, the receiving means **4**, the demodulation means **5**, the addition control means **6**, and the speed detection means **91** is the same as described in the previous examples and will not be repeated.

Hereinafter, an exemplary operation of the receiving state estimation means **14** will be described in detail. The receiving state estimation means **14** acquires information such as, for example, transfer characteristics of the receiving signal obtained by the demodulation means **5** and determines whether or not the receiving signal includes a jamming signal such as, for example, a delay wave. When the interference signal is determined to exist in the receiving signal, the receiving state estimation means **14** estimates a multipath interference state, which is at least one of the signal level, the delay time period and phase of the delay wave. The receiving state estimation means **14** also acquires information on an error amount in the demodulated data. The method for estimating the transfer characteristics of the receiving signal is described in the previous examples and will not be repeated. The receiving state estimation means **14** acquires information of the level of the signals received by the input means **1** and obtains data such as, for example, a receiving state of each antenna **11** in the past one year. Then, the receiving state estimation means **14** estimates the current receiving state using the information obtained from the input means **1** and the demodulation means **5**, and transfers the estimated current receiving state to the addition control means **6**. The receiving state estimation means **14** also acquires information on a modulation mode of transmission parameter of the receiving signal when necessary.

Hereinafter, an exemplary operation of the gain control means **61** included in the addition control means **6** will be described. The gain control means **61** obtains control information for the gain adjustment sections **31** included in the addition means **3**, based on the receiving state estimated by the receiving state estimation means **14**. As described in the first example, when the receiving state is satisfactory, sufficient characteristics are obtained using only one input signal. Accordingly, the gain control means **61** supplies the addition means **3** with a control signal for giving a gain to one input signal and attenuating the other input signals. By such a system, data received by one antenna is selected, and thus a receiving state realized by receiving data by one antenna is created. When the signal level is reduced or multipath interference is increased, the gain control means **61** supplies the addition means **3** with a control signal for giving a gain to a plurality of input signals.

At this point, it is effective that the gain control means **61** supplies the addition means **3** with a control signal for giving different values of gains to all appropriate input signals in order to reduce the correlation among the input signals. The gain control means **61** needs to instruct the addition means **3** to avoid rapid gain changes. The reason for this is that, since an OFDM modulation signal includes a control signal used for demodulation, a rapid antenna switching may undesirably invalidate the data accumulated during the past one year.

The gain control means **61** can be simplified so that a fixed value of gain is given to the signals.

Instead of controlling the delay time period as described above, the phase of the signals can be directly controlled as in the sixth example. The same effect is provided.

Hereinafter, an exemplary operation of the delay time period control means **62** will be described. The delay time period control means **62** determines a delay amount to be given to each input signal by the delay means **2**, based on the receiving state and other information obtained by the receiving state estimation means **14**. Here, a method for controlling the delay amount in the case where a plurality of signals are added while changing each of the phases thereof time-wise will be described for example. The delay amount given by the delay means **2** can be controlled by the method described in the first through fourth examples.

Hereinafter, how the moving state of the digital TV broadcast receiving apparatus is related to the reception of the digital terrestrial TV signals while adding signals input to a plurality of antennas will be described.

Digital TV broadcasting involves various techniques for preventing multipath interferences. Accordingly, as compared to conventional analog TV broadcasting, the digital TV broadcasting is less susceptible to interferences regardless of the moving state of the digital TV broadcast receiving apparatus.

The above-mentioned measures against the interferences include the following: (1) an OFDM modulation mode is adopted; (2) a guard interval period is provided between effective symbol periods for preventing inter-code interference by a delay wave; and (3) data streams to be sent are re-arranged in time and frequency directions so that data errors in a receiving signal are dispersed, and thus an error correction capability is improved by error correction coding in order to avoid generation of receiving errors occurring in a burst manner.

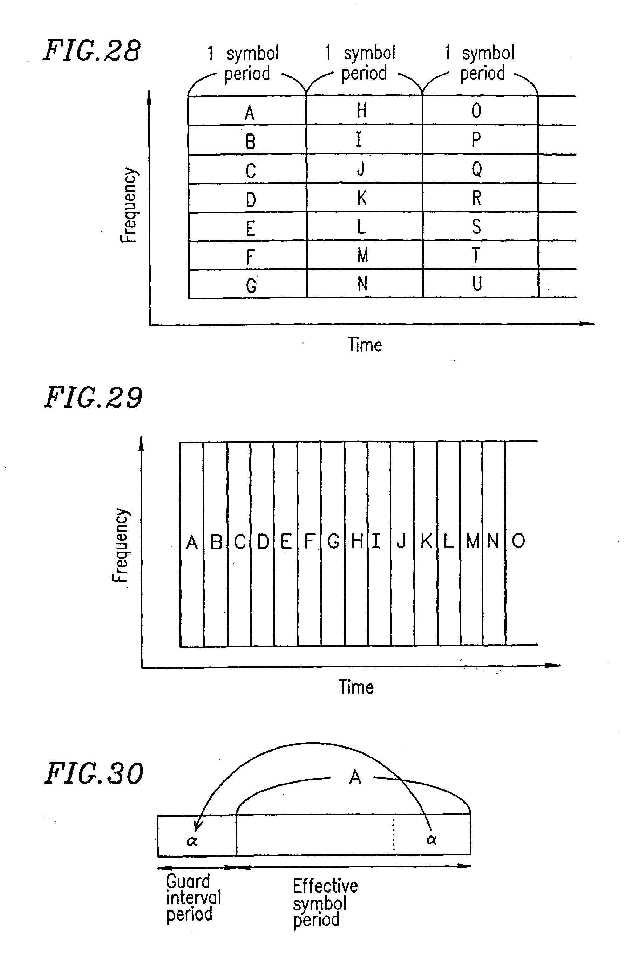

With reference to Figures **28** through **30**, effective symbol, effective symbol period, and guard interval period will be described.

Figure **28** shows an exemplary structure of an OFDM signal, and Figure **29** shows an exemplary structure of an analog TV transfer signal.

The OFDM signal includes a plurality of carriers. When, for example, information of "A, B, C, D ..." is transferred, information blocks A through G are transferred simultaneously, and then information blocks H through N are transferred simultaneously as shown in Figure **28**. A period in which information blocks A through G are transferred is referred to as one effective symbol period. One effective symbol period depends on an inter-carrier interval of the OFDM signal. When, for example, the inter-carrier interval is 4 kHz, one effective symbol period is 1/4000=250×10⁻⁶ seconds. Information block A or G is referred to as one effective symbol.

The OFDM signal can include a guard interval period in addition to the effective symbol period in order to transfer information block A. Figure **30** shows one effective symbol period and one guard interval period. For example, information block A can be transferred during one effective symbol period. However, there is an undesirable possibility that information block A includes an interference wave and the information block A influences a direct wave of information block H. In order to avoid this, a lead part of each information block has information on a rear part of the same block written. The leading part is referred to as the guard interval period. Alternatively, a rear part of each information block has information on a lead part of the same block written.

However, it is expected that when the input signal level is excessively low or a receiving interference such as, for example, frequency selective fading by a high-level interference wave is generated, data receiving errors in an amount exceeding the error correction capability are generated. In order to avoid this, it is effective for reducing errors to raise the input signal level by adding together input signals from a plurality of antennas 11 and also reduce the frequency selective fading.

While the digital TV broadcast receiving apparatus is moving, the signal receiving characteristics of the plurality of antennas 11 continuously vary. Even when the signals from the plurality of antennas are added together, the signals do not have a 180 degree phase difference to cancel each other for a long period of time.

However, when the digital TV broadcast receiving apparatus stops or is moving at a low speed, the signal receiving characteristics of the plurality of antennas 11 do not significantly vary. This generates the probability that signals with a 180 degree phase difference cancel each other while being added together for an extended period of time. In order to avoid this, the digital TV broadcast receiving apparatus varies the delay time period of at least one of the plurality of input signals time-wise. In this manner, each of the phases of the plurality of input signals can be varied with respect from each other time-wise. This corresponds to the case where the electromagnetic wave received by each antennas is subjected to the Doppler effect. Such a system allows the characteristics of the signals to be constantly varied.

As described above, while the mobile is moving, there is little necessity to control the phase of the signals since the receiving characteristics of the signals are constantly varying.

Hereinafter, an exemplary operation of the delay time period control means 62 in consideration of the moving state of the digital TV broadcast receiving apparatus will be described.

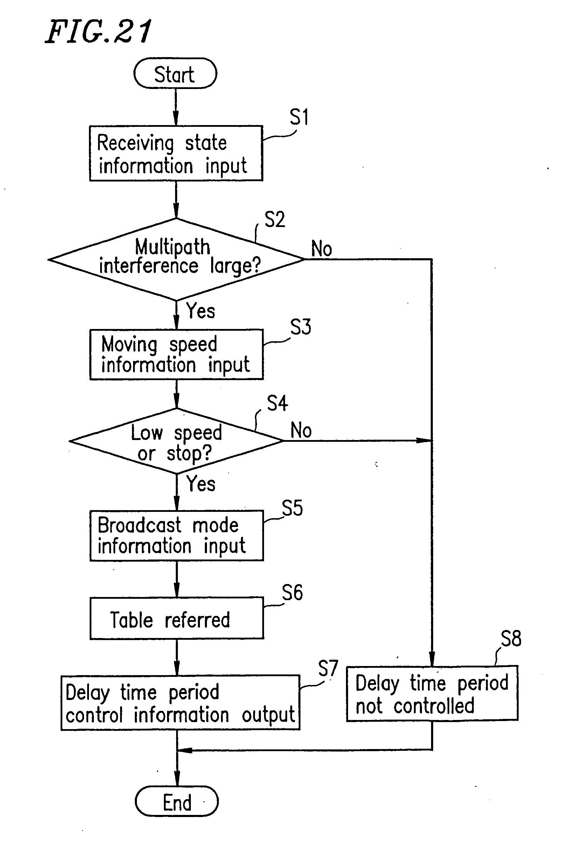

Figure 21 is a flowchart illustrating an operation of the delay time period control means 62.

In step S1, the delay time period control means 62 obtains receiving state information from the receiving state estimation means 14. In step S2, the delay time period control means 62 determines the amount of receiving multipath interferences based on the receiving state information. When the delay time period control means 62 determines that the multipath interferences are larger than a reference amount in step S2, the delay time period control means 62 obtains moving speed information from the speed detection means 91 in step S3. In step S4, the delay time period control means 62 determines the moving speed of the mobile based on the moving speed information. When the delay time period control means 62 determines that the mobile is moving at a low speed or stops in step S4, the delay time period control means 62 obtains broadcasting mode information from the receiving state estimation means 14 in step S5. In this specification, "low speed" refers to a speed at which the Doppler frequency generated by the movement of the vehicle mounting the digital TV broadcast receiving apparatus in this example becomes, for example, about 0 Hz to about 10 Hz. In step S6, the delay time period control means 62 refers to a table indicating the correspondence between the delay time period control amount and the broadcasting mode, to obtain an optimum value of the control amount for the delay time period. In step S7, the delay time period control means 62 outputs delay time period control information.

When the delay time period control means 62 determines that the multipath interferences are not larger than a reference amount in step S2 or that mobile is not moving at a low speed or stops in step S4, the delay time period control means 62 outputs delay time period control information for preventing the control of delay time period in step S8. Thus, the operation is terminated.

The table regarding the control amount for the delay time period which is referred to in step S6 will be briefly described. When the delay time period is controlled so as to vary the phase of the signal time-wise, a change in phase causes inter-carrier interference to an OFDM modulation signal. In order to avoid this, the delay time period control means 62 needs to set the upper limit of the shift amount of the phase. The upper limit of the shift amount can be, for example, about 1% or less of the inter-carrier interval. Since the influence of the inter-carrier interference varies in accordance with the modulation mode or transmission parameter (e.g., time interleave), it is effective to set the phase shift amount or the upper limit of the phase shift amount for each carrier modulation mode or for each transmission parameter. For example, the delay time period can be controlled as follows: when the inter-carrier interval of an OFDM modulation signal is 2 kHz and the carrier modulation mode is a DQPSK modulation mode, the upper limit of the phase shift amount is set to be 20 Hz, which is 1% of the inter-carrier interval; and when the data is modulated by a 16QAM modulation mode, the phase shift amount is set to be 10 Hz, which is 0.5% of the inter-carrier interval.

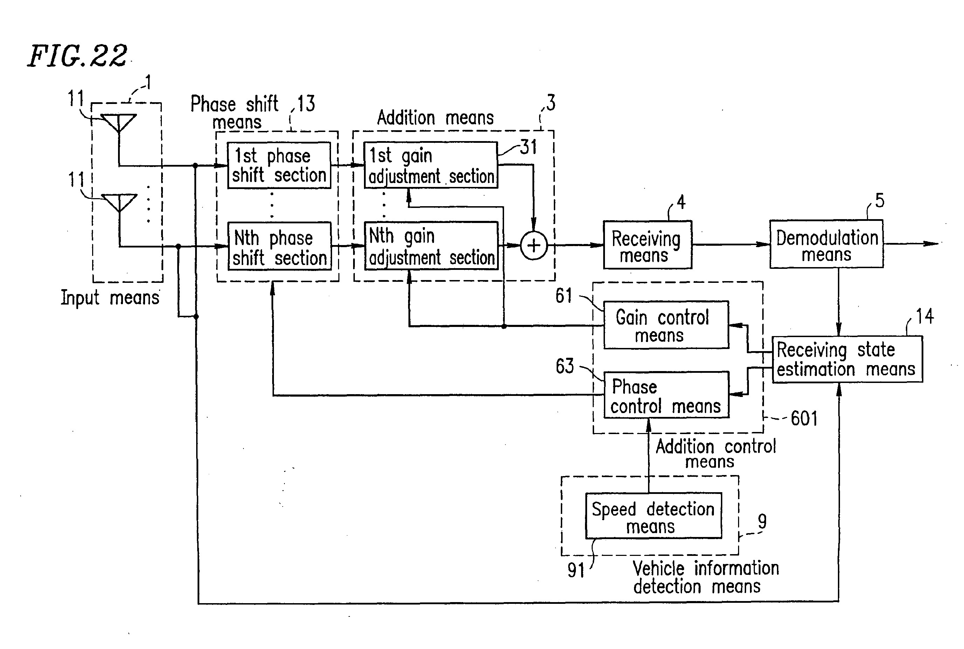

Instead of controlling the delay time period as described above, the phase of the signals can be directly controlled as in the sixth example. The same effect is provided. Figure 22 shows an exemplary structure of the digital TV broadcast receiving apparatus usable when the phase of the signal is directly controlled. In the apparatus shown in Figure 22, the phase shift means 13 is used in lieu of the delay means 2 shown in Figure 20. Phase control means 63 is used in lieu of the delay time period control means 62 shown in Figure 20. The operation of the phase shift means 13 and the phase control means 63 is the same as described in the sixth example and will not be repeated.

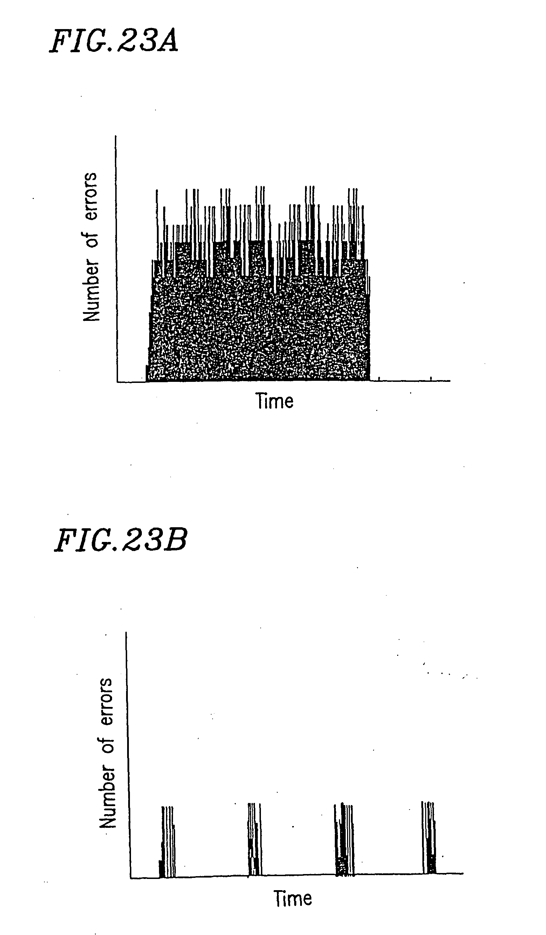

With reference to Figures 23A and 23B, the receiving error generation state which occurs when a plurality of input signals are added together while the each of phases thereof are varied time-wise will be described. Figure 23A shows the receiving error generation state which occurs when signals are received by one antenna in the environment having relatively strong receiving interferences; and Figure 23B shows the receiving error generation state which occurs when signals are received by a plurality of antennas in the same environment. In Figures 23A and 23B, the horizontal axis represents the time, and the vertical axis represents the number of errors.

As can be appreciated from Figures 23A and 23B, when the signals are received by a plurality of antennas, the number of data errors is reduced and the timing at which the errors occur is dispersed time-wise. Thus, reception of error generation occurring continuously in a short period of time can be restricted by adding together a plurality of input signals while each of the phases thereof are controlled.

Since the receiving system in this example can prevent reception of error generation occurring continuously in a short period of time and reduce the number of data errors, the length of time interleave required when transmitting the signals can be shortened. The reason for this is that, since the system in this example prevents continuous generation of errors, the data errors can be dispersed time-wise even when the length of time interleave is short. By shortening the length of time interleave required when transmitting the signals, the amount of receiving data which needs to be stored for recovering the data streams in a digital TV broadcast receiving apparatus is advantageously reduced.

As described above, the digital TV broadcast receiving apparatus in the seventh example reduces the generation of receiving interferences by obtaining information on receiving state and moving speed and then adding together the plurality of input signals while each of the phases and gains thereof are controlled in accordance with the obtained information. Furthermore, by varying each of the phases of the signals time-wise, error generation occurring continuously in a short period of time is received, which has been a problem occurring when a plurality of antenna input signals are added together, is restricted. The system in this example prevents continuous generation of receiving errors unlike the conventional art, errors can be dispersed even when the length of time interleave is short. This allows the time interleave added when transmitting the signals to be shortened. The structure in this example can be combined to any of the structures described in the first through sixth examples.

In the first through seventh examples, the input means 1 can include a plurality of antennas 11, and a signal to be output from the input means 1 can be selected among the signals output from the plurality of antennas 11. The receiving efficiency can be raised by deleting undesirable signals even from the signals output from the antennas 11.

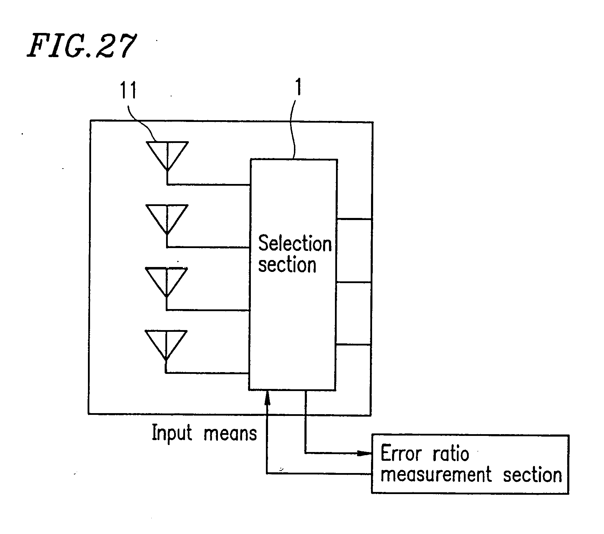

A part of a digital TV broadcast reducing apparatus having such a structure will be described with reference to Figure 27. Figure 27 is a block diagram illustrating input means 1 including a plurality of antennas 11 and a selection section, and an error ratio measurement section. The digital TV broadcast reducing apparatus have the same structure with those described in the first through seventh examples except for the input means 1 and the error ratio measurement section.

The input means 1 includes the plurality of antennas 11 and the selection section for selecting a signal to be output based on a control signal obtained from the error ratio measurement section. The error ratio measurement section measures an error ratio of signals in the demodulation means. When the error ratio exceeds a prescribed value, the error ratio measurement section supplies the selection section in the input means 1 with a control signal for allowing the selection section to select a signal having a level exceeding a prescribed level among the signals output from the antennas 11. Due to the structure shown in Figure 27, digital TV broadcasting can be received stably.

The selection section selects a signal having a level exceeding a prescribed level, among the signals output from the antennas 11. The selection is performed at an interval which is equal to or greater than a defined value of the receiving signal. The defined value of the receiving signal refers to, for example, a time period required to send one frame of data of the OFDM signal. The selection section can select the signal in each receiving frame of the receiving signal or in each arbitrary frame.

In order to delete undesirable signals from the signals output from the antennas 11, other structures are also usable.

For example, the addition control means 6 can generate a control signal for varying the addition ratio of the addition means 3, based on a signal which is output from the delay wave estimation means 7. In this case, the addition ratio is varied. Among the signals received by the addition means 3, signals are attenuated so that the level of signals corresponding to the signals, having an error ratio of a level exceeding a prescribed level, in the demodulation means 7 becomes 0.

The addition ratio can be varied at an interval which is equal to or greater than a defined value of the receiving signal. The addition ratio can be varied in each receiving frame of the receiving signal or in each arbitrary frame.

In the first through seventh examples, the set values such as, for example, the addition ratio of the addition means, the delay time period of the delay means, the amplification ratio of the amplification means, and the shift amount of the phase shift means can be updated during the guard interval period of the receiving signal, immediately after the effective symbol period, or immediately before the effective symbol period.

In the first through seventh examples, the position information determination means 8 can acquire information on the position of the transmitting station and estimate the radio state of the receiving position based on the information obtained by the vehicle information detection means 9 and the position of the transmitting station. The information determination means 8 can store the radio states of a plurality of positions in advance and estimate the radio state of the receiving position based on the information obtained by the vehicle information detection means 9. The information determination means 8 can obtain the radio states of a plurality of positions at a prescribed interval or at an arbitrary interval, update the radio states of the plurality of positions, and estimate the radio state of the receiving position based on the information obtained by the vehicle information detection means 9. Alternatively, the radio state can be estimated by the system in which a broadcasting station sends receiving information data indicating the receiving state of a plurality of positions and any of the digital TV broadcast receiving apparatuses in the first through seventh examples receives the receiving information data.

The present invention can improve receiving interferences generated by a change in the transfer characteristics which occurs by flight of a plane in addition to improving receiving interferences generated while the receiving apparatus is moving. In other words, the present invention is applicable to a fixed receiver as well as a mobile receiver.

As can be appreciated from the above description, the present invention significantly improves receiving interferences such as, for example, multipath interferences or reduction in the electric field strength of a TV signal, which occurs when the digital TV signal is received, as compared to the conventional art. The improvement is realized by signal processing such as, for example, delay control of a receiving signal, addition of a plurality of signals, or estimation of receiving interferences. The improvement is also realized by using a plurality of antennas as input means of signals or controlling the installment position of one or more antennas.

In the case where data on the receiving state at the receiving position of digital TV broadcasting is sent from a transmitting station, the digital TV broadcast receiving apparatus according to the present invention estimates the receiving interference state at the receiving position and alleviates the interferences using the data.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A digital TV broadcast receiving apparatus, comprising:
change means for receiving first through Nth signals and changing at least an (N-1)th signal among the received signals by feed-forward control; and
addition means for adding the signals output from the change means,
wherein N is a natural number of 2 or greater, and
wherein said change means varies at least the (N-1)th signal among the received signals in a time-wise manner.

2. A digital TV broadcast receiving apparatus, comprising:
change means for receiving first through Nth signals and changing at least an (N-1)th signal among the received signals based on an external signal; and
addition means for adding the signals output from the change means,
wherein:
N is a natural number of 2 or greater,
the external signal is generated based on the signal obtained by the addition means, and
said change means varies at least the (N-1)th signal among the received signals in a time-wise manner.

3. A digital TV broadcast receiving apparatus according to claim 1, wherein the change means is phase shift means for shifting a phase of at least the (N-1)th signal.

4. A digital TV broadcast receiving apparatus according to claim 1, wherein the change means is delay means for delaying at least the (N-1)th signal so as to change at least the (N-1)th signal.

5. A digital TV broadcast receiving apparatus according to claim 2, wherein the change means is phase shift means for shifting a phase of at least the (N-1)th signal by a prescribed amount.

6. A digital TV broadcast receiving apparatus according to claim 2, wherein the change means is delay means for delaying at least the (N-1)th signal by a prescribed delay time period so as to change at least the (N-1)th signal.

7. A digital TV broadcast receiving apparatus according to claim 6, further comprising;
input means for converting an electromagnetic wave into a plurality of electric signals and outputting the plurality of electric signals as the first through the Nth signals;
receiving means for performing frequency conversion of the signal added by the addition means and outputting the frequency-converted signal; and
demodulation means for converting the frequency-converted signal into a baseband signal,
wherein:
the delay means allows the prescribed delay time period to be arbitrarily set, and
the addition means allows an addition ratio at which the signals output from the delay means are added to be arbitrarily set.

8. A digital TV broadcast receiving apparatus according to claim 6, further comprising:
input means for converting an electromagnetic wave into a plurality of electric signals and outputting the plurality of electric signals;
amplification means for amplifying the plurality of electric signals at a prescribed amplification ratio and outputting the amplified signals as the first through the Nth signals;
receiving means for performing frequency conversion of the signal added by the addition means and outputting the frequency-converted signal;
demodulation means for demodulating the frequency-converted signal;
delay wave estimation means for receiving a signal indicating a demodulation state obtained by the demodulation means and estimating delay wave information included in the electromagnetic wave received by the input means based on the demodulation state; and
addition control means for generating at least one of the prescribed amplification ratio and the prescribed delay time period based on the delay wave information obtained by the delay wave estimation means, and outputting the at least one of the prescribed amplification ratio and the prescribed delay time period to at least one of the amplification means and the delay means.

9. A digital TV broadcast receiving apparatus according to claim 6, further comprising:
input means for converting an electromagnetic wave into a plurality of electric signals and outputting the plurality of electric signals;
receiving means for performing frequency conversion of the plurality of electric signals and outputting the plurality of frequenoy-converted signals as the first through the Nth signals; and
demodulation means for converting the signal added by the addition means into a baseband signal,
wherein:
the delay means allows the prescribed delay time period to be arbitrarily set, and
the addition means allows an addition ratio at which the signals output by the delay means are added to be arbitrarily set.

10. A digital TV broadcast receiving apparatus according to claim 5, further comprising:
input means for converting an electromagnetic wave into a plurality of electric signals and outputting the plurality of electric signals as the first through the Nth signals;
receiving means for performing frequency conversion of the signal added by the addition means and outputting the frequency-converted signal; and
demodulation means for converting the frequency-converted signal into a baseband signal,
wherein:
the phase shift means allows the prescribed amount to be arbitrarily set, and
the addition means allows an addition ratio at which the signals output by the phase shift means are added to be arbitrarily set.

11. A digital TV broadcast receiving apparatus according to claim 5, further comprising:
input means for converting an electromagnetic wave into a plurality of electric signals and outputting the plurality of electric signals;
amplification means for amplifying the plurality of electric signals at a prescribed amplification ratio and outputting the amplified signals as the first through the Nth signals;
receiving means for performing frequency conversion of the signal added by the addition means and outputting the frequency-converted signal;
demodulation means for demodulating the frequency-converted signal;
delay wave estimation means for receiving a signal indicating a demodulation state obtained by the demodulation means and estimating delay wave information included in the electromagnetic wave received by the input means based on the demodulation state; and
addition control means for generating at least one of the prescribed amplification ratio and the prescribed amount based on the delay wave information obtained by the delay wave estimation means, and outputting the at least one of the prescribed amplification ratio and the prescribed amount to at least one of the amplification means and the phase shift means.

12. A digital TV broadcast receiving apparatus according to claim 5, further comprising:
input means for converting an electromagnetic wave into a plurality of electric signals and outputting the plurality of electric signals;
receiving means for performing frequency conversion of the plurality of electric signals and outputting the plurality of frequency-converted signals as the first through the Nth signals; and
demodulation means for converting the signal added by the addition means into a baseband signal,
wherein:
the phase shift means allows the prescribed amount to be arbitrarily set, and
the addition means allows an addition ratio at which the signals output by the phase shift means are added to be arbitrarily set.

13. A digital TV broadcast receiving apparatus according to claim 7 or 9, further comprising:
delay wave estimation means for receiving a signal indicating a demodulation state obtained by the demodulation means and estimating delay wave information included in the electromagnetic wave received by the input means based on the demodulation state; and
addition control means for generating at least one of the prescribed addition ratio and the prescribed delay time period based on the delay wave information obtained by the delay wave estimation means, and outputting the at least one of the prescribed addition ratio and the prescribed delay time period to at least one of the addition means and the delay means.

14. A digital TV broadcast receiving apparatus according to claim 10 or 12, further comprising:
delay wave estimation means for receiving a signal indicating a demodulation state obtained by the demodulation means and estimating delay wave information included in the electromagnetic wave received by the input means based on the demodulation state; and
addition control means for generating at least one of the prescribed addition ratio and the prescribed amount based on the delay wave information obtained by the delay wave estimation means, and outputting the at least one of the prescribed addition ratio and the prescribed amount to at least one of the addition means and the phase shift means.

15. A digital TV broadcast receiving apparatus according to claim 8, 11, 13 or 14, wherein the delay wave estimation means receives a signal indicating the demodulation state obtained by the demodulation means and estimates the delay wave information including a strength of a delay wave, a phase difference between the delay wave and a direct wave, and a delay time period of the delay wave with respect to the direct wave.

16. A digital TV broadcast receiving apparatus according to claim 8 or 13, wherein the addition control means includes delay time period control means having a variable reactance element, and controls the prescribed delay time period by varying a voltage applied to the variable reactance element.

17. A digital TV broadcast receiving apparatus according to claim 11 or 14, wherein the addition control means includes phase control means having a variable reactance element, and controls the prescribed amount by varying a voltage applied to the variable reactance element.

18. A digital TV broadcast receiving apparatus according to claim 8 or 13, further comprising:
position detection means for detecting a receiving position of the digital TV broadcast receiving apparatus; and
position information determination means for determining a radio state at the receiving position in accordance with a signal from the position detection means,
wherein the addition control means generates at least one of the prescribed amplification ratio and the prescribed delay time based on the delay wave information obtained by the delay wave estimation means and the radio state obtained by the position information determination means.

19. A digital TV broadcast receiving apparatus according to claim 11 or 14, further comprising:
position detection means for detecting a receiving position of the digital TV broadcast receiving apparatus; and
position information determination means for determining a radio state at the receiving position in accordance with a signal from the position detection means,
wherein the addition control means generates at least one of the prescribed amplification ratio and the prescribed amount based on the delay wave information obtained by the delay wave estimation means and the radio state obtained by the position information determination means.

20. A digital TV broadcast receiving apparatus according to claim 8 or 13, further comprising:
speed detection means for detecting a moving speed of the digital TV broadcast receiving apparatus;
position detection means for detecting a receiving position of the digital TV broadcast receiving apparatus; and
position information determination means for determining a radio state at the receiving position in accordance with a signal from the position detection means and a signal from the speed detection means,
wherein the addition control means generates at least one of the prescribed amplification ratio and the prescribed delay time period based on the delay wave information obtained by the delay wave estimation means and the radio state obtained by the position information determination means.

21. A digital TV broadcast receiving apparatus according to claim 11 or 14, further comprising:
speed detection means for detecting a moving speed of the digital TV broadcast receiving apparatus;
position detection means for detecting a receiving position of the digital TV broadcast receiving apparatus; and
position information determination means for determining a radio state at the receiving position in accordance with a signal from the position detection means and a signal from the speed detection means,
wherein the addition control means generates at least one of the prescribed amplification ratio and the prescribed amount based on the delay wave information obtained by the delay wave estimation means and the radio state obtained by the position information determination means.

22. A digital TV broadcast receiving apparatus according to any one of claims 18 through 21, wherein the speed detection means and the position detection means are a navigation system.

23. A digital TV broadcast receiving apparatus according to claim 8 or 11, wherein the amplification means complements a reduction in signal gain at signal distribution.

24. A digital TV broadcast receiving apparatus according to any one of claims 7 through 23, wherein the input means includes a plurality of antennas having different receiving characteristics.

25. A digital TV broadcast receiving apparatus according to claim 13 or 14, further comprising amplification means for complementing a reduction in signal gain at signal distribution.
